(19) Europäisches Patentamt
European Patent Office
Office européen des brevets

(11) **EP 4 761 161 A1**

(12) **EUROPEAN PATENT APPLICATION**
published in accordance with Art. 153(4) EPC

(43) Date of publication:
**17.06.2026 Bulletin 2026/25**

(21) Application number: **23948129.4**

(22) Date of filing: **10.08.2023**

(51) International Patent Classification (IPC):
*H04L 5/00* (2006.01)     *H04W 24/00* (2009.01)

(52) Cooperative Patent Classification (CPC):
**H04L 5/00; H04W 24/00;** Y02D 30/70

(86) International application number:
**PCT/CN2023/112400**

(87) International publication number:
**WO 2025/030559 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **1FINITY INC.**
**Kawasaki-shi, Kanagawa 211-8588 (JP)**

(72) Inventors:
• **LU, Yiwen**
**Beijing 100022 (CN)**
• **ZHANG, Lei**
**Beijing 100022 (CN)**

(74) Representative: **Haseltine Lake Kempner LLP**
**Cheapside House**
**138 Cheapside**
**London EC2V 6BJ (GB)**

(54) **CHANNEL STATE INFORMATION REPORT GENERATION METHOD, RECEIVING METHOD AND APPARATUS**

(57)     Embodiments of this disclosure provide CSI report generation and reception methods, and apparatuses thereof. The report generation method includes: receiving channel state information reference signal (CSI-RS) resource configuration information and CSI report configuration information, wherein, the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and generating a CSI report according to the CSI-RS resource configuration information and the CSI report configuration information, wherein the CSI report includes N CSI-RS resource indices (CRIs), where N is an integer greater than or equal to 1.

301

channel state information reference signal (CSI-RS)
resource configuration information and CSI report
configuration information are received

302

a CSI report is generated according to the CSI-RS
resource configuration information and the CSI report
configuration information

**Fig. 3**

## Description

Technical Field

This disclosure relates to the field of communications technologies.

Background

With the popularization of fifth-generation (5G) communication networks across various industries and application thereof in an increasing number of geographical regions, to support more advanced services, extremely high data rates and denser networks are required, along with the adoption of a greater number of antennas, broader bandwidth, and more frequency bands; consequently, the energy consumption of 5G equipment is becoming increasingly large. According to operator statistics, the average energy consumption of a single 5G base station exceeds three times that of a Long Term Evolution (LTE) base station; electricity costs account for nearly 50% of the total expenditure of operators in 5G network deployment. What is more critical is that 5G base stations still incur considerable energy consumption overhead even during periods with no service traffic. Therefore, network energy conservation is of significant importance for enhancing environmental sustainability, reducing environmental impact (e.g., cutting greenhouse gas emissions), and lowering operational costs. As such, energy efficiency in 5G networks is an urgent issue to be addressed.

To achieve network energy conservation, Release 18 (Rel-18) has established relevant work items on network energy conservation to research various energy-saving technologies. During discussions, network energy-saving technologies may be categorized into such types as time-domain/frequency-domain/spatial-domain/energy-domain energy conservation. Spatial-domain energy conservation involves, for example, dynamically adjusting the number of antennas; energy-domain energy conservation includes, for example, dynamically adjusting data transmission power; time-domain energy conservation involves, for example, the introduction of cell Discontinuous Transmission (DTX)/Discontinuous Reception (DRX), and so forth.

The adoption of various energy-saving technologies enables substantial energy savings for a network device; however, it may also exert negative impacts on other processes or technologies in a communication system and give rise to certain compatibility issues with the configuration methods specified in existing standards. For example, in New Radio (NR) energy-saving scenarios, a terminal side may measure and report Channel State Information (CSI) of one or more energy-saving sub-configurations according to existing or enhanced CSI resource configurations, providing sufficient channel state information reporting for the data transmission of a base station with the aim of energy conservation.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

It was found by the inventors that the current CSI reporting mechanism fails to support the reporting of multiple types of CSI information for one or more sub-configurations. How a terminal equipment performs joint channel measurement on one or more sub-configurations and reports the measurement results has become an urgent problem to be addressed in network energy-saving technologies.

To address at least one of the aforementioned problems or other similar problems, the embodiments of the present disclosure provide channel state information report generation and reception methods, and apparatuses thereof.

According to an aspect of the embodiments of this disclosure, there is provided a channel state information (CSI) report generation method, configured in a terminal equipment, the method including:

receiving channel state information reference signal (CSI-RS) resource configuration information and CSI report configuration information,

wherein the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and

generating a CSI report according to the CSI-RS resource configuration information and the CSI report configuration information, wherein the CSI report includes N CSI-RS resource indices (CRIs), where N is an integer greater than or equal to 1.

According to another aspect of the embodiments of this disclosure, there is provided a channel state information (CSI) report reception method, configured in a network device, the method including:

transmitting channel state information reference signal (CSI-RS) resource configuration information and CSI report configuration information to a terminal equipment,

wherein the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and

receiving a CSI report generated by the terminal equipment according to the CSI-RS resource configuration information and the CSI report configuration information, wherein the CSI report includes N CSI-RS resource indices (CRIs), where N is an integer greater than or equal to 1.

According to a further aspect of the embodiments of this disclosure, there is provided a CSI report generation apparatus, configured in a terminal equipment, wherein, the apparatus includes:

a reception unit configured to receive channel state information reference signal (CSI-RS) resource configuration information and CSI report configuration information,
wherein the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and
a generation unit configured to generate a CSI report according to the CSI-RS resource configuration information and the CSI report configuration information, wherein the CSI report includes N CSI-RS resource indices (CRIs), where N is an integer greater than or equal to 1.

According to a still further aspect of the embodiments of this disclosure, there is provided a CSI report reception apparatus, configured in a network device, the apparatus including:

a transmission unit configured to transmit channel state information reference signal (CSI-RS) resource configuration information and CSI report configuration information to a terminal equipment,
wherein the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and
a reception unit configured to receive a CSI report generated by the terminal equipment according to the CSI-RS resource configuration information and the CSI report configuration information, wherein the CSI report includes N CSI-RS resource indices (CRIs), where N is an integer greater than or equal to 1.

According to a yet still further aspect of the embodiments of this disclosure, there is provided a communication system, including: a terminal equipment configured to receive channel state information reference signal (CSI-RS) resource configuration information and CSI report configuration information, wherein, the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and generating a CSI report according to the CSI-RS resource configuration information and the CSI report configuration information, wherein the CSI report includes N CSI-RS resource indices (CRIs), where N is an integer greater than or equal to 1; and a network device configured to transmit the CSI-RS resource configuration information and the CSI report configuration information and receive the CSI report.

One of advantages of the embodiments of this disclosure exists in that, through receiving, by a terminal equipment, CSI-RS resource configuration information and CSI reporting configuration information containing at least one piece of sub-configuration information, and generating a CSI report including at least one CSI-RS resource index according to the CSI-RS resource configuration information and CSI reporting configuration information, the terminal equipment is enabled to perform joint channel measurement on one or more sub-configurations and report the measurement results, which facilitates efficient and accurate CSI measurement by the terminal equipment, ensures data transmission performance and achieves network energy conservation.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

FIG. 1 is a schematic diagram of a communication system according to embodiments of this disclosure;
FIG. 2 is a schematic diagram of an energy-saving scenario according to embodiments of this disclosure;
FIG. 3 is a schematic diagram of a channel state information report generation method according to embodiments of this disclosure;
FIGs. 3A and 3B are schematic diagrams of channel state information reference signal resources according to embodiments of this disclosure;
FIG. 4 is a schematic diagram of a channel state information report reception method according to embodiments of this disclosure;
FIG. 5 is a schematic diagram of a channel state information report generation apparatus according to embodiments of this disclosure;
FIG. 6 is a schematic diagram of a channel state information report reception apparatus according to embodiments of this disclosure;
FIG. 7 is a schematic diagram of a network device according to embodiments of this disclosure; and
FIG. 8 is a schematic diagram of a terminal equipment according to embodiments of this disclosure.

Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communications network" or "wireless communications network" may refer to a network satisfying any one of the following communication standards: long term evolution (LTE), long term evolution-advanced (LTE-A), wideband code division multiple access (WCDMA), and high-speed packet access (HSPA), etc.

And communications between devices in a communications system may be performed according to communication protocols at any stage, which may, for example, include but not limited to the following communication protocols: 1G (generation), 2G, 2.5G, 2.75G, 3G, 4G, 4.5G, 5G, new radio (NR), and 6G in the future, and/or other communication protocols that are currently known or will be developed in the future.

In the embodiments of this disclosure, the term "network device", for example, refers to an equipment in a communication system that accesses a terminal equipment to the communications network and provides services for the terminal equipment. The network device may include but not limited to the following equipment: a base station (BS), an access point (AP), a transmission reception point (TRP), a broadcast transmitter, a mobile management entity (MME), a gateway, a server, a radio network controller (RNC), a base station controller (BSC).

The base station may include but not limited to a node B (NodeB or NB), an evolved node B (eNodeB or eNB), a 5G base station (gNB) and an Integrated Access and Backhaul (IAB) donor. Furthermore, it may include a remote radio head (RRH), a remote radio unit (RRU), a relay, or a low-power node (such as a femto, and a pico). The term "base station" may include some or all of its functions, and each base station may provide communications coverage for a specific geographical area. And a term "cell" may refer to a base station and/or its coverage area, which depends on a context of the term.

In the embodiments of this disclosure, the term "user equipment (UE)" or "terminal equipment (TE) or terminal device" refers to, for example, equipment accessing to a communication network and receiving network services via a network device. The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communications device, a hand-held device, a machine-type communications device, a lap-top, a cordless telephone, a smart cell phone, a smart watch, and a digital camera.

For another example, in a scenario such as the Internet of Things (IoT), etc., the user equipment may also be a machine or a device performing monitoring or measurement. For example, it may include but not limited to a machine-type communications (MTC) terminal, a vehicle mounted communication terminal, a device to device (D2D) terminal, and a machine to machine (M2M) terminal.

Moreover, the term "network side" or "network device side" refers to a side of a network, which may be a base station, and may include one or more network devices described above. The term "user side" or "terminal side" or "terminal equipment side" refers to a side of a user or a terminal, which may be a UE, and may include one or more terminal equipments described above. Unless otherwise specified in this disclosure, "device" may refer to a network device or a terminal equipment.

Scenarios in the embodiments of this disclosure shall be described below by way of examples, but this disclosure is not limited thereto.

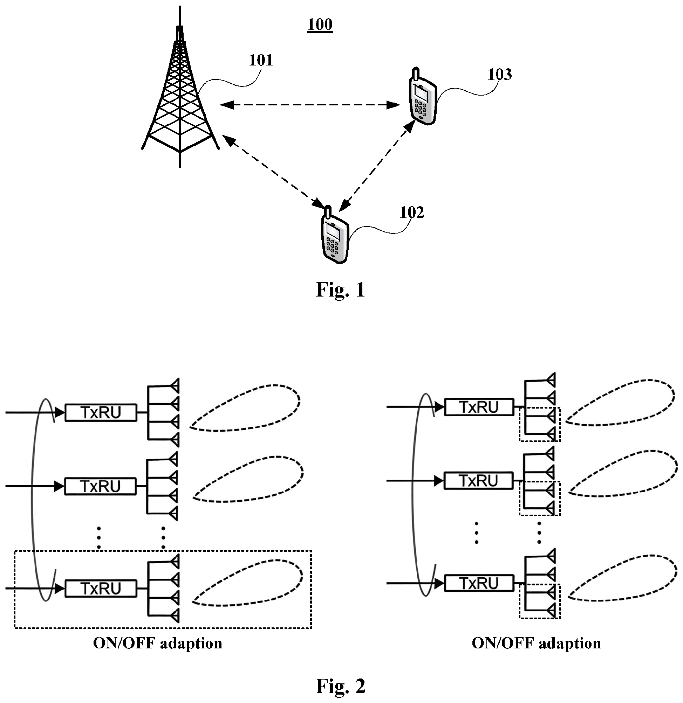

FIG. 1 is a schematic diagram of a communications system of an embodiment of this disclosure, in which a case where terminal equipments and a network device are taken as examples is schematically shown. As shown in FIG. 1, a communications system 100 may include a network device 101 and terminal equipments 102, 103. For the sake of simplicity, an example having only two terminal equipments and one network device is schematically given in FIG. 1; however, the embodiment of this disclosure is not limited thereto.

In the embodiments of this disclosure, existing services or services that may be implemented in the future may be performed between the network device 101 and the terminal equipments 102, 103 or between the terminal equipments 102, 103. For example, such services may include but not limited to an enhanced mobile broadband (eMBB), massive machine type communication (mMTC), and ultra-reliable and low-latency communication (URLLC).

It should be noted that FIG. 1 shows that the two terminal equipments 102 and 103 are both within the coverage of the network device 101, but this disclosure is not limited thereto. Two terminal equipments 102 and 103 may not be within the coverage of network device 101, or the terminal equipment 102 may be within the coverage of network device 101 and the terminal equipment 103 may be outside the coverage of network device 101.

In the embodiments of this disclosure, higher layer signaling may be, for example, Radio Resource Control (RRC) signaling; Such signaling may be referred to as an RRC message, including, for example, a Master Information Block (MIB), system information, and a dedicated RRC message; alternatively, such signaling may also be referred to as an RRC information element (RRC IE). Higher layer signaling may also be, for example, Medium Access Control (MAC) signaling, or referred to as a MAC control element (MAC CE). However, this disclosure is not limited thereto.

In the embodiments of this disclosure, within a mobile communication system, typically, a terminal equipment performs channel state information (CSI) measurement according to an indication and a configuration from a network device, and reports the obtained CSI by measurement to the network device. When scheduling the terminal equipment, the network device may refer to the CSI to schedule the terminal equipment for transmission by adopting an appropriate transmission mode at appropriate physical resources. Different terminal equipments may experience varying physical channel conditions, and the adoption of a CSI feedback mechanism enables rational and efficient utilization of physical resources, thereby improving the transmission efficiency of the entire network.

In a CSI feedback mechanism of New Radio (NR), a terminal equipment mainly performs measurement on reference signals and reports the measurement results according to CSI configurations, where the reference signals include a Channel State Information-Reference Signal (CSI-RS), a Synchronization Signal Block (SSB), and the like. A CSI configuration of NR is primarily divided into two parts: the first part involves the network device configuring, for the terminal equipment, reference resources (CSI-RS resource configurations) for performing CSI measurement; and the second part involves the network device configuring, for the terminal equipment, how to perform CSI reporting (CSI reporting configuration).

For example, CSI-RS resources configured by a CSI-RS resource configuration (resource setting) may be used for interference measurement, CSI channel measurement, and so on. Each CSI-RS resource configuration contains S resource sets, and each resource set contains Ks CSI-RS resources (i.e., the Y CSI-RS resources described hereinafter). An aperiodic resource configuration may contain one or more resource set(s), and a periodic and semi-persistent resource configuration shall contain only one resource set when used for CSI acquisition.

In the embodiments of this disclosure, regarding a value of Ks:

when the CSI-RS resources are used for CSI channel measurement, if a codebook type in the reporting configuration is 'Type I' (specifically including CodebookType = 'TypeISinglePanel' or 'TypeIMultiPanel'), $K_s \leq 32$; and
when the CSI-RS resources are used for CSI channel measurement, if the codebook type in the reporting configuration is 'Type II' (specifically including CodebookType = 'typeII', 'typeII-PortSelection', 'typeII-r16', 'typeII-PortSelection-r16', 'typeII-PortSelection-r17'), $K_s$ = 1. This is primarily because the computational complexity of Type II is relatively high, which imposes considerable computational challenges on a terminal equipment; thus, the NR system relatively reduces the computational complexity of the terminal equipment by restricting the value of Ks.

A CSI report consists of two parts: Part 1 and Part 2. CSI Part 1 (also referred to as Part 1) has a fixed payload size and indicates the number of information bits of CSI Part 2 (also referred to as Part 2). In CSI reporting, when the current CSI measurement is used for CSI channel measurement, the provisions on reporting contents are as follows according to different codebook types:

> Type I CSI: Part 1 includes a Rank Indicator (RI)/CSI-RS Resource Index (CRI) and a Channel Quality Indicator (CQI) of the first code word (CW), and Part 2 includes a Layer Indicator (LI) and a Precoding Matrix Indicator (PMI), and also includes a CQI of the second CW when a rank is greater than 4; and
> Type II CSI: Part 1 includes the RI, the CQI and the number of non-zero wideband amplitude coefficients per layer, and Part 2 includes the LI and the PMI.

In an NR energy-saving scenario, association is supported between an enhanced CSI resource configuration and one or more sub-configurations in a CSI report configuration; that is, a terminal side may measure and report CSI information of one or more energy-saving sub-configurations according to the enhanced CSI resource configuration, providing sufficient channel state information reporting for the data transmission of a base station with the aim of energy conservation.

For CSI Resource Enhancement Method 1 for energy conservation purposes, one or more CSI-RS resource(s) in a CSI-RS resource set for channel measurement may be associated with the same sub-configuration provided in a CSI report configuration; that is, one sub-configuration in a CSI report configuration may be associated with one or more CSI-RS resource(s) for channel measurement in a CSI-RS resource set, wherein, the resources in the resource set for channel measurement have the same number of antenna ports.

For CSI Resource Enhancement Method 2 for energy conservation purposes, one or more CSI-RS resource(s) in a CSI-RS resource set for channel measurement may be associated with a plurality of sub-configurations provided in a CSI report configuration, each CSI-RS resource is associated with all the sub-configurations, and the resources in the resource set for channel measurement have the same number of antenna ports.

In the related art, a CSI-RS resource configuration is an RRC semi-static configuration, where the number of CSI-RS ports and the time-frequency positions thereof remain unchanged for a relatively long period of time.

However, the inventors find that, in a network energy-saving scenario, to achieve the objective of network energy conservation, one feasible solution is that a network device may adjust the antenna configuration used to serve a terminal equipment according to the real-time requirements of the network, such as the number of antenna elements, antenna ports, and the like.

FIG. 2 is a schematic diagram of an energy-saving scenario according to embodiments of this disclosure. As shown in Fig. 2, the spacial-domain/energy-domain element adjustment technologies related to network energy conservation may be classified into two types:

The adjustment on the left side of Fig. 2 may be referred to as Type 1 adjustment; for example, corresponding to energy-saving scenario 1, it involves enabling or disabling all the antennas (factors) associated with one logical antenna port (also referred to as a digital antenna port, antenna port, port, etc.). In this approach, a network device may turn off all antennas (factors) corresponding to one or more antenna port(s). After being turned off, the transmission power of each port remains unchanged, while the total number of antenna ports decreases. Therefore, this adjustment directly affects the number of antenna ports, thereby further impacting the transmission power of a reference signal.

The adjustment on the right side of Fig. 2 may be referred to as Type 2 adjustment; for example, corresponding to energy-saving scenario 2, it involves enabling or disabling part of the antenna factors associated with one logical antenna port. In this approach, a network device may turn off part of the antennas (factors) corresponding to all antenna ports. After being turned off, the number of antenna ports remains unchanged, while the transmission power of each port is reduced. Therefore, this adjustment affects the beamforming gain of a network device, thereby further impacting the transmission power of a reference signal.

As shown in Fig. 2, energy-saving scenario 1 achieves network energy conservation by turning off some digital antenna ports. On a terminal equipment side, after the varying number of antenna ports are turned off, the terminal equipment performs measurement according to the different numbers of ports and generates CSI information corresponding to the different digital ports. Consequently, the 'nrofports' in the CSI resource configuration may take different values under different energy-saving configurations. Therefore, the number of dimensions corresponding to antenna ports in a PMI matrix of the CSI reported under different energy-saving sub-configurations varies. For energy-saving scenario 1, the most common approach is to distinguish different antenna port sub-configurations via the antenna port indication within a CSI-RS resource; for example, different subsets of antenna ports in a CSI-RS resource may correspond to different antenna port shutdown configurations.

As shown in Fig. 2, energy-saving scenario 2 achieves network energy conservation by dynamically adjusting the number of antennas of TXRUs (Transceiver Units) or the number of radio frequency antennas without modifying the number of digital antenna ports. Therefore, in this case, the value of 'nrofports' in the CSI resource configuration under different energy-saving sub-configurations may remain unchanged, and the number of dimensions corresponding to antenna ports in a PMI matrix of the reported CSI also stays the same; thus, this may be protocol-transparent to the terminal equipment. For energy-saving scenario 2, the most common approach is to distinguish different energy-saving sub-configurations via distinct CSI-RSs; for example, different CSI resources may correspond to the shutdown of different energy-saving sub-configurations.

In particular, in energy-saving scenario 2, as can be seen from CSI Resource Enhancement Method 2 in the related art, each sub-configuration includes at least one or more pieces of CSI-RS resource information (such as a CSI-RS resource ID (indication) list). The list may contain one CSI-RS resource ID or a plurality of CSI-RS resource IDs; thus, one sub-configuration may be associated with at least one CSI-RS resource ID.

Hence, when the terminal equipment needs to report CSI according to a plurality of sub-configurations, and when reporting according to a Type I codebook, the terminal equipment first reports the optimal CSI-RS resource index value, such as a CRI (a CSI-RS Resource Index), in CSI Part 1, so that a base station may know which CSI-RS the terminal equipment used for channel measurement. However, currently there is no enhancement for CRI reporting according to one or more sub-configurations. As a result, a terminal equipment is not able to report a plurality of CSI-RS resources, and a base station is not able to determine which CSI-RS resource corresponds to each energy-saving sub-configuration for CSI measurement and reporting. This impairs the accuracy of CSI reporting and the correspondence of CSI-RS resources.

To address at least one of the aforementioned problems, the embodiments of the present disclosure provide channel state information report generation and reception methods, and apparatuses thereof.

Embodiments of the first aspect

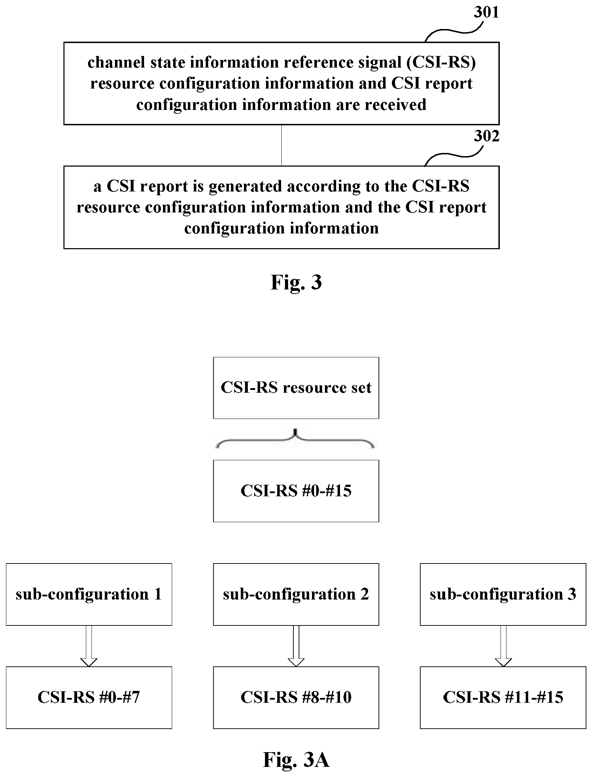

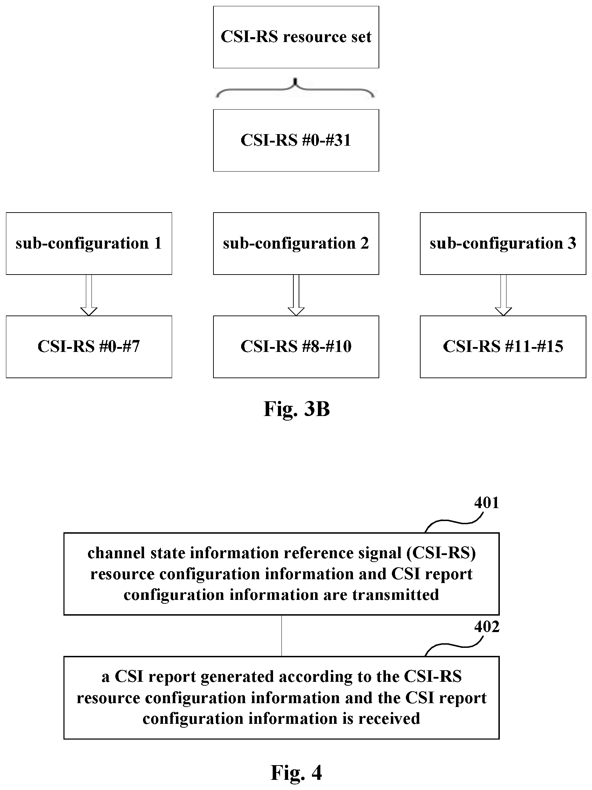

The embodiments of this disclosure provide a channel state information report generation method, which shall be described from a terminal equipment side. FIG. 3 is a schematic diagram of a channel state information report generation method according to embodiments of this disclosure; as shown in Fig. 3, the method includes:

301, channel state information reference signal (CSI-RS) resource configuration information and CSI report configuration information are received,

wherein the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and

302, a CSI report is generated according to the CSI-RS resource configuration information and the CSI report configuration information, wherein the CSI report includes N CSI-RS resource indices (CRIs), where N is an integer greater than or equal to 1.

Hence, through receiving, by the terminal equipment, CSI-RS resource configuration information and CSI reporting configuration information containing at least one piece of sub-configuration information, and generating a CSI report including at least one CSI-RS resource index according to the CSI-RS resource configuration information and CSI reporting configuration information, the terminal equipment is enabled to perform joint channel measurement on one or more sub-configurations and report the measurement results, which facilitates efficient and accurate CSI measurement by the terminal equipment, ensures data transmission performance and achieves network energy conservation.

It should be noted that FIG. 3 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 3.

In some embodiments, the CSI-RS resource configuration information is used to configure at least one CSI-RS resource set, wherein, one CSI-RS resource set in the at least one CSI-RS resource set configured by the CSI-RS resource configuration information includes Y CSI-RS resources, where Y is an integer greater than or equal to 1. For example, the CSI-RS resources may be time-frequency resources, and the like.

In some embodiments, the CSI report configuration information includes M pieces of sub-configuration information, where M is an integer greater than or equal to 1. The M pieces of sub-configuration information are used to configure M energy-saving sub-configurations (also referred to as sub-configurations) and may indicate a reporting mode (e.g., a bit width, and the like) of CRIs to which the M energy-saving sub-configurations correspond. Consequently, according to the CSI-RS resource configuration information and the CSI reporting configuration information, the terminal equipment is able to determine the CSI-RS resources for performing CSI channel measurements on each energy-saving sub-configuration. Furthermore, according to the CSI-RS resource configuration information and/or the CSI reporting configuration information, the terminal equipment is able to determine a specific format of the CRIs in the CSI report to be reported to the network device.

In some embodiments, the meaning of a sub-configuration may vary across different energy-saving scenarios.

For example, in some energy-saving scenarios (such as energy-saving scenario 1), each CSI-RS resource in a CSI-RS resource set may correspond to M types of antenna port configurations. Herein, one type of antenna port configuration corresponds to one sub-configuration.

For instance, for a CSI-RS resource set, the CSI-RS resource set is configured with 4 CSI-RS resources, and each CSI-RS resource is configured with up to 32 antenna ports. Taking M = 3 as an example, each CSI-RS resource may be configured with 3 types of antenna ports respectively, such as 32 ports, 16 ports and 8 ports. Herein, the first sub-configuration may contain 4 CSI-RS resources in the CSI-RS resource set, with each CSI-RS resource configured with 32 antenna ports; the second sub-configuration may contain 4 CSI-RS resources in the CSI-RS resource set, with each CSI-RS resource configured with 16 antenna ports; the third sub-configuration may contain 4 CSI-RS resources in the CSI-RS resource set, with each CSI-RS resource configured with 8 antenna ports. That is, ports to which the CSI-RS resources in one sub-configuration correspond are either a complete set or a non-empty subset of ports configurable for the CSI-RS resources.

For example, in some energy-saving scenarios (such as energy-saving scenario 2), each CSI-RS resource in a CSI-RS resource set may correspond to one type of antenna port configuration. Herein, a group of CSI-RS resources in the CSI-RS resource set corresponds to one sub-configuration; the group of CSI-RS resources includes one or more CSI-RS resources, and the number of antennas corresponding to each group of CSI-RS resources may be the same or different.

For instance, for a CSI-RS resource set, the CSI-RS resource set is configured with 16 CSI-RS resources, and each CSI-RS resource is configured with 32 antenna ports. Taking M = 3 as an example, three groups of CSI-RS resources may be selected from the 16 CSI-RS resources: the first group of CSI-RS resources, the second group of CSI-RS resources and the third group of CSI-RS resources, with each group of CSI-RS resources containing at least one CSI-RS resource. The first group of CSI-RS resources, the second group of CSI-RS resources and the third group of CSI-RS resources may correspond to one type of antenna configuration respectively. For instance, each antenna port of the first group of CSI-RS resources may be configured with 8 antennas; each antenna port of the second group of CSI-RS resources may be configured with 4 antennas; and each antenna port of the third group of CSI-RS resources may be configured with 2 antennas. That is, antennas to which ports of the CSI-RS resources in one sub-configuration correspond are either a complete set or a non-empty subset of antennas configurable for the ports of the CSI-RS resources.

In some embodiments, the CSI report configuration information includes M pieces of sub-configuration information. In some embodiments, the sub-configuration information may vary across different energy-saving scenarios.

For example, in some energy-saving scenarios (such as energy-saving scenario 1), the CSI report configuration information is associated with one CSI-RS resource set in the at least one CSI-RS resource set configured by the CSI-RS resource configuration information. Herein, each sub-configuration information in the M pieces of sub-configuration information included in the CSI report configuration information is associated with Y CSI-RS resources in one CSI-RS resource set in the at least one CSI-RS resource set. In other words, each sub-configuration information in the M pieces of sub-configuration information corresponds to all CSI-RS resources in one CSI-RS resource set.

The *m-th* sub-configuration information in the M pieces of sub-configuration information includes one piece of port indication information, where $1 \leq m \leq M$. The port indication information indicates the terminal equipment on which antenna ports to perform channel measurements. The port indication information of each sub-configuration in the M sub-configurations may be the same or different; for example, ports for each sub-configuration or the number of the ports for each sub-configuration may be the same or different.

For instance, for a CSI-RS resource set, the CSI-RS resource set is configured with 4 CSI-RS resources, and each CSI-RS resource is configured with up to 32 antenna ports. Taking M = 3 as an example, each CSI-RS resource may be configured with 3 types of antenna ports respectively, such as 32 ports, 16 ports and 8 ports. Herein, the port indication information may be represented by a 32-bit bitmap. For example, the first sub-configuration information may be a 32-bit bitmap with all bits set to 1, indicating 32 ports; the second sub-configuration information may be a 32-bit bitmap with 16 bits set to 1 and the remaining bits set to 0, indicating 16 ports; the third sub-configuration information may be a 32-bit bitmap with 8 bits set to 1 and the remaining bits set to 0, indicating 8 ports.

For another example, in some energy-saving scenarios (such as energy-saving scenario 2), the CSI report configuration information is associated with one CSI-RS resource set in the at least one CSI-RS resource set configured by the CSI-RS resource configuration information. Herein, the *m-th* sub-configuration information in the M pieces of sub-configuration information is associated with Zm CSI-RS resources in Y CSI-RS resources in one CSI-RS resource set in the at least one CSI-RS resource set, where Zm is a positive integer, $Zm \leq$ Y, and $1 \leq m \leq M$. In other words, the *m-th* sub-configuration information in the M pieces of sub-configuration information corresponds to Zm CSI-RS resources in one CSI-RS resource set.

The number of CSI-RS resources associated with the M pieces of sub-configuration information is less than or equal to Y. Herein, the CSI-RS resources associated with the M pieces of sub-configuration information are a set of CSI-RS resources associated with each sub-configuration information in the M pieces of sub-configuration information, and the number of the CSI-RS resources associated with the M pieces of sub-configuration information is $\sum_{m=1}^{M} Zm$.

The *m-th* sub-configuration information in the M pieces of sub-configuration information includes IDs of the Zm CSI-RS resources; hence, the terminal equipment is indicated on which CSI-RS resources to perform channel measurements. The number of CSI-RS resources (i.e., the value of Zm) associated with each sub-configuration information in the M pieces of sub-configuration information may be the same or different, and the number of corresponding antennas may also be the same or different.

For instance, for a CSI-RS resource set, the CSI-RS resource set is configured with 16 CSI-RS resources, and each CSI-RS resource is configured with 32 antenna ports. Taking M = 3 as an example, three groups of CSI-RS resources may be selected from the 16 CSI-RS resources, with each group of CSI-RS resources corresponding to one type of antenna configuration respectively. For example, the first sub-configuration information may include IDs of 8 CSI-RS resources, indicating 8 CSI-RS resources in one CSI-RS resource set; the second sub-configuration information may include IDs of 4 CSI-RS resources, indicating 4 CSI-RS resources in one CSI-RS resource set; the third sub-configuration information may include IDs of 4 CSI-RS resources, indicating 4 CSI-RS resources in one CSI-RS resource set.

In some embodiments, the CSI report includes N CRIs, where N is greater than or equal to 1. A value of each CRI in the N CRIs is associated with at least one sub-configuration information.

For example, a value of each CRI in the N CRIs is associated with one sub-configuration information in the M pieces of sub-configuration information. When N = M, the value of each CRI in the N (M) CRIs is in one-to-one association with each sub-configuration information in the M pieces of sub-configuration information.

For example, a value of each CRI in the N CRIs is associated with all sub-configuration information in the M pieces of sub-configuration information.

Hereinafter, taking the aforementioned energy-saving scenario 1 as an example, an illustrative description of the CSI report is provided.

In some embodiments, the CSI report includes N CRIs, where N is greater than or equal to 1. For example, the terminal equipment may select at least one CSI-RS resource from the configured CSI-RS resources according to a preset metric, and indicate the at least one CSI-RS resource via the CRIs. For instance, the terminal equipment may select one CSI-RS resource from Y CSI-RS resources in the configured CSI-RS resource set according to a metric such as Reference Signal Receiving Power (RSRP), and indicate the one CSI-RS resource via one CRI.

In some embodiments, the CSI-RS resources may be indicated in a variety of ways via the CRI. For example, a value of the *n-th* CRI in the N CRIs is i_n, and the *n-th* CRI is associated with the *(i_n+1)-th* CSI-RS resource in the Y CSI-RS resources in one CSI-RS resource set, where $1 \leq n \leq N$.

For instance, for a CSI-RS resource set, the CSI-RS resource set is configured with 4 CSI-RS resources. If the second CSI-RS resource has the highest RSRP, the second CSI-RS resource is indicated by a CRI with a value of 1.

However, the present disclosure is not limited thereto, and the CSI-RS resources may also be indicated by means of CRI in other ways.

In some embodiments, a bitwidth of the *n-th* CRI in the N CRIs is $\lceil \log(Y) \rceil$ bits. For example, the CRI is represented by $\lceil \log(Y) \rceil$ bits, thereby enabling one CRI to uniquely indicate one CSI-RS resource among the Y CSI-RS resources.

In some embodiments, a bitwidth of the N CRIs is Y bits. For example, the N CRIs are represented by a Y-bit bitmap, where one bit in the bitmap corresponds to one CSI-RS resource among the Y CSI-RS resources.

A detailed illustrative description is provided below.

The operation of a terminal equipment may include at least one of the following:

> Step 1: the terminal equipment receives a CSI-RS resource configuration for channel measurements, wherein the CSI-RS resource configuration configures one CSI-RS resource set containing Y = 4 CSI-RS resources. Specifically, in the CSI-RS resource configuration, a resource port configuration may be performed on the CSI-RS resource set; for example, 'nrofports' = '8', it indicates that each resource in the resource set contains time-frequency resource information of 8 ports, such as REs (Resource Elements).
>
> Step 2: the terminal equipment receives a CSI reporting configuration, which is at least configured to configure M = 2 pieces of sub-configuration information, wherein M = 2 denotes two types of sub-configuration information corresponding to 8 ports and 4 ports respectively.
>
> Step 3: the CSI reporting configuration received by the terminal equipment is associated with the CSI-RS resource set in the CSI-RS resource configuration. Specifically, both of the two pieces of sub-configuration information in the CSI reporting configuration are associated with the Y = 4 CSI-RS resources included in the set. That is, the terminal side may measure the channel state information corresponding to the two types of sub-configurations according to each resource, and report the channel state information to a network side.

Step 4: according to channel information (large-scale and/or small-scale) of the four resources, the terminal equipment selects N optimal resources and reports index value information of the optimal resources to the network side. Specifically:

a) Step 4-1: the terminal side may select to report N = M = 2 optimal resources, wherein each resource is associated with each piece of sub-configuration information respectively. For example, if the first CRI = '11' (2 bits), the CRI reported by the terminal side is associated with the (3+1)-th resource in the Y CSI-RS resources, indicating that a CSI-RS resource selection result under the first sub-configuration is the 4-th resource in the Y = 4 CSI-RS resources; if the second CRI = '01', the CRI reported by the terminal side is associated with the (1+1)-nd resource in the Y CSI-RS resources, indicating that a CSI-RS resource selection result under the second sub-configuration is the 2nd resource in the Y = 4 CSI-RS resources.

Alternatively: the terminal side may select to report N = M = 2 optimal resources, wherein each resource is associated with each piece of sub-configuration information. For example, the CRIs of the N resources may be represented by a Y-bit bitmap. For instance, a 4-bit bitmap: 1001 is used to represent the CRI selection, then a CSI-RS resource selection result under the first sub-configuration is the 1st resource in the Y = 4 CSI-RS resources, and a CSI-RS resource selection result under the second sub-configuration is the 4-th resource in the Y = 4 CSI-RS resources.

b) Step 4-2: the terminal side may select to report N = 1 optimal resource, wherein each resource is associated with all sub-configuration information. For example, if one CRI = '11', the CRI reported by the terminal side is associated with the (3+1)-th resource in the Y CSI-RS resources, indicating that a CSI-RS resource selection result under the first sub-configuration and the second sub-configuration is the 4-th resource in the Y = 4 CSI-RS resources.

Alternatively: the terminal side may select to report N = 1 optimal resource, wherein each resource is associated with all sub-configuration information. For example, the CRI of one resource may be represented by a Y-bit bitmap. For instance, a 4-bit bitmap: 0001 is used to represent the CRI selection, the CRI reported by the terminal side is associated with the 4-th resource in the Y CSI-RS resources.

Hereinafter, taking the aforementioned energy-saving scenario 2 as an example, an illustrative description of the CSI report is provided.

In some embodiments, the CSI report includes N CRIs, where N is greater than or equal to 1. For example, the terminal equipment may select at least one CSI-RS resource from the configured CSI-RS resources according to a preset metric, and indicate the at least one CSI-RS resource via N CRIs.

In some embodiments, the CSI-RS resources may be indicated in a variety of ways via the CRI.

For example, a value of the *n-th* CRI in the N CRIs is i_n, and the *n-th* CRI is associated with the *(i_n +1)-th* CSI-RS resource in the Zm CSI-RS resources associated with the *m-th* sub-configuration information in the M pieces of sub-configuration information, where $1 \le n \le N$, $1 \le m \le M$, and $N \le M$.

For instance, for a CSI-RS resource set, the CSI-RS resource set is configured with 16 CSI-RS resources. The first sub-configuration information indicates the 1st to 8th resources in the 16 CSI-RS resources (1st sub-configuration: CSI-RS#0-CSI-RS#7); the second sub-configuration information indicates the 9th to 11th resources in the 16 CSI-RS resources (2nd sub-configuration: CSI-RS#8-CSI-RS#10); the third sub-configuration information indicates the 12th to 16th resources in the 16 CSI-RS resources (3rd sub-configuration: CSI-RS#11-CSI-RS#15). If a value of the first CRI is 7, it indicates the 8th resource in the first sub-configuration, i.e., CSI-RS#7; if a value of the second CRI is 1, it indicates the 2nd resource in the second sub-configuration, i.e., CSI-RS#9; if a value of the third CRI is 3, it indicates the 4th resource in the third sub-configuration, i.e., CSI-RS#14.

However, the present disclosure is not limited thereto, and the CSI-RS resources may also be indicated by means of CRI in other ways.

In some embodiments, a bitwidth of the *n-th* CRI in the N CRIs is $\lceil \log(Zm) \rceil$ bits. For example, the CRI is represented by $\lceil \log(Zm) \rceil$ bits, thereby enabling one CRI to uniquely indicate one CSI-RS resource among the Zm CSI-RS resources.

For another example, a value of the *n-th* CRI in the N CRIs is i_n, and the *n-th* CRI is associated with the *(i_n+1)-th* CSI-RS resource in CSI-RS resources associated with the M pieces of sub-configuration information, the CSI-RS resources associated with the M pieces of sub-configuration information including a set of CSI-RS resources associated with each sub-configuration information in the M pieces of sub-configuration information, where $1 \le n \le N$, and $N \le M$.

For instance, the first sub-configuration information indicates CSI-RS#0-CSI-RS#7; the second sub-configuration information indicates CSI-RS#8-CSI-RS#10; the third sub-configuration information indicates CSI-RS#11-CSI-RS#15. If a value of the first CRI is 7, it indicates the 8th resource in CSI-RS#0-CSI-RS#15.

However, the present disclosure is not limited thereto, and the CSI-RS resources may also be indicated by means of CRI in other ways.

In some embodiments, a bitwidth of the *n-th* CRI in the N CRIs is $\lceil \log(\sum_{m=1}^{M} Zm) \rceil$ bits, where Zm is the number of CSI-RS resources to which the *m-th* sub-configuration information in the M pieces of sub-configuration information corresponds, and $1 \le m \le M$. For example, the CRI is represented by $\lceil \log(\sum_{m=1}^{M} Zm) \rceil$ bits, thereby enabling one CRI to uniquely indicate one CSI-RS resource among the $\sum_{m=1}^{M} Zm$ CSI-RS resources.

For another example, a value of the *n-th* CRI in the N CRIs is i_n, and the *n-th* CRI is associated with the *(i_n+1)-th* CSI-RS resource in the Y CSI-RS resources in one CSI-RS resource set, where $1 \le n \le N$.

For instance, for a CSI-RS resource set, the CSI-RS resource set is configured with 4 CSI-RS resources. If the second CSI-RS resource has the highest RSRP, the second CSI-RS resource is indicated by a CRI with a value of 1.

In some embodiments, a bitwidth of the N CRIs is $\sum_{m=1}^{M} Zm$ bits.

However, the present disclosure is not limited thereto, and the CSI-RS resources may also be indicated by means of CRI in other ways.

In some embodiments, a bitwidth of the *n-th* CRI in the N CRIs is $\lceil \log(Y) \rceil$ bits. For example, the CRI is represented by $\lceil \log(Y) \rceil$ bits, thereby enabling one CRI to uniquely indicate one CSI-RS resource among the Y CSI-RS resources.

In some embodiments, a bitwidth of the N CRIs is Y bits. For example, the N CRIs are represented by a Y-bit bitmap, where one bit in the bitmap corresponds to one CSI-RS resource among the Y CSI-RS resources.

A detailed illustrative description is provided below.

Implementation 1: the operation of a terminal equipment may include at least one of the following:

> Step 1: the terminal equipment receives a CSI-RS resource configuration for channel measurements, wherein the CSI-RS resource configuration contains one CSI-RS resource set containing Y = 16 CSI-RS resources. Specifically, in the resource configuration, a resource port configuration may be performed on the CSI-RS resource set; for example, 'nrofports' = '8', it indicates that each resource in the resource set contains time-frequency resource information of 8 ports, such as REs (Resource Elements).
> Step 2: the terminal equipment receives a CSI reporting configuration, which is at least configured to configure M = 3 pieces of sub-configuration information, wherein M = 3 represents scenarios of different physical antenna energy-saving sub-configurations under 8 digital ports.

a) Specifically, a resource correspondence relationship under each sub-configuration may be performed by configuring M = 3 resource ID lists in the CSI reporting configuration.

Specifically, the *M-th* sub-configuration information in the three pieces of sub-configuration information is associated with Zm CSI-RS resources in the Y = 16 CSI-RS resources in the CSI-RS resource set, where Zm is a positive integer.

FIG. 3A is a schematic diagram of CSI resources according to embodiments of this disclosure.

a-1) As shown in Fig. 3A, the resource IDs corresponding to sub-configuration 1 in the CSI reporting configuration are CSI-RS#0 to #7 (Z1 = 8), which indicates that the 1st sub-configuration information is associated with the first 8 CSI-RS resources in the Y = 16 CSI-RS resources in the CSI-RS resource set; the resource IDs corresponding to sub-configuration 2 in the CSI reporting configuration are CSI-RS#8 to #10 (Z2 = 3), which indicates that the 2nd sub-configuration information is associated with the 9th to 11th CSI-RS resources (a total of 3 resources) in the Y = 16 CSI-RS resources in the CSI-RS resource set; the resource IDs corresponding to sub-configuration 3 in the CSI reporting configuration are CSI-RS#11 to #15 (Z3 = 5), which indicates that the 3rd sub-configuration information is associated with the 12th to 16th CSI-RS resources (a total of 5 resources) in the Y = 16 CSI-RS resources in the CSI-RS resource set.

a-2) As shown in Fig. 3A, Z1 = 8, Z2 = 3, and Z3 = 5. The sum of the values of Zm (i.e., 8 + 3 + 5 = 16) is equal to Y.

Step 3-1: optionally, the network side may also notify the terminal side, via additional indication information, to report M' partial sub-configurations out of the M sub-configurations for CSI reporting. The additional indication information may be Medium Access Control Control Element (MAC-CE), Downlink Control Information (DCI), etc. For example, the network side may notify the terminal equipment, via a DCI indication, to only report the CSI corresponding to the first sub-configuration information and the third sub-configuration information.

Step 3-2: the terminal equipment may measure, according to resource lists corresponding to the first and third sub-configurations, the channel state information corresponding to the two sub-configurations, and report the information to the network side.

Step 4: according to channel information (large-scale and/or small-scale) of the 16 resources, the terminal equipment selects N optimal resources and reports index value information of the optimal resources to the network side. Specifically, the reported CRI may be generated by one of the following methods:

> Method 1: the terminal side may select to report N = M' = 2 optimal resources, where each resource is associated with each piece of sub-configuration information respectively. The 1st CRI corresponds to the resource selection under the first sub-configuration, and thus the reported bit width is log(8) = 3 bits. For example, if the first CRI = '011', the '011' reported by the terminal side is associated with the (3+1)-th resource in the Z1 CSI-RS resources in the first sub-configuration, indicating that a CSI-RS resource selection result under the first sub-configuration is the 4th resource in the Z1 CSI-RS resources in the first sub-configuration. The 2nd CRI corresponds to the resource selection under the third sub-configuration, and thus the reported bit width is the ceiling of log(5) = 3 bits. If the second CRI = '001', the '001' reported by the terminal side is associated with the (1+1)-nd resource in the Z3 CSI-RS resources in the third sub-configuration, indicating that a CSI-RS resource selection result under the third sub-configuration is the 2nd resource in the Z3 CSI-RS resources in the third sub-configuration.

Method 2: the terminal side may select to report N = M' = 2 optimal resources, where each optimal resource is associated with each piece of sub-configuration information respectively. The 1st CRI corresponds to the resource selection under the first sub-configuration, and the reported bit width is log(Y = 16) = 4 bits. For example, if the first CRI = '0011', the '0011' reported by the terminal side is associated with the (3+1)-th resource in the Y resources, indicating that a CSI-RS resource selection result under the first sub-configuration is the 4th resource in the Y resources. The 2nd CRI corresponds to the resource selection under the third sub-configuration, and the reported bit width is log(Y = 16) = 4 bits. If the second CRI = '1100', the '1100' reported by the terminal side is associated with the (12+1)-th resource in the Y resources, indicating that a CSI-RS resource selection result under the third sub-configuration is the 13th resource in the Y = 16 CSI-RS resources.

Implementation 2: the operation of a terminal equipment may include at least one of the following:

Step 1: the terminal equipment receives a CSI-RS resource configuration for channel measurements, wherein the CSI-RS resource configuration contains one CSI-RS resource set containing Y = 16 CSI-RS resources. Specifically, in the resource configuration, a resource port configuration may be performed on the CSI-RS resource set; for example, 'nrofports' = '8', it indicates that each resource in the resource set contains time-frequency resource information of 8 ports, such as REs (Resource Elements).

Step 2: the terminal equipment receives a CSI reporting configuration, which is at least configured to configure M = 3 pieces of sub-configuration information, wherein M = 3 represents scenarios of different physical antenna energy-saving sub-configurations under 8 digital ports.

a) Specifically, a resource correspondence relationship under each sub-configuration may be performed by configuring M = 3 resource ID lists in the reporting configuration.

Specifically, the *M-th* sub-configuration information in the three pieces of sub-configuration information is associated with Zm CSI-RS resources in the Y = 16 CSI-RS resources in the CSI-RS resource set, where Zm is a positive integer.

a-1) As shown in Fig. 3A, the resource IDs corresponding to sub-configuration 1 in the CSI reporting configuration are CSI-RS#0 to #7 (Z1 = 8), which indicates that the 1st sub-configuration information is associated with the first 8 CSI-RS resources in the Y = 16 CSI-RS resources in the CSI-RS resource set; the resource IDs corresponding to sub-configuration 2 in the CSI reporting configuration are CSI-RS#8 to #10 (Z2 = 3), which indicates that the 2nd sub-configuration information is associated with the 9th to 11th CSI-RS resources (a total of 3 resources) in the Y = 16 CSI-RS resources in the CSI-RS resource set; the resource IDs corresponding to sub-configuration 3 in the CSI reporting configuration are CSI-RS#11 to #15 (Z3 = 5), which indicates that the 3rd sub-configuration information is associated with the 12th to 16th CSI-RS resources (a total of 5 resources) in the Y = 16 CSI-RS resources in the CSI-RS resource set.

a-2) As shown in Fig. 3A, Z1 = 8, Z2 = 3, and Z3 = 5. The sum of the values of Zm (i.e., 8 + 3 + 5 = 16) is equal to Y.

Step 3-1: optionally, the network side may also notify the terminal side, via additional indication information, to report M sub-configurations for CSI reporting.

Step 3-2: the terminal equipment may measure, according to resource lists corresponding to three sub-configurations, the channel state information corresponding to the three sub-configurations, and report the information to the network side.

Step 4: according to channel information (large-scale and/or small-scale) of the 16 resources, the terminal equipment selects N = M optimal resources and reports index value information of the optimal resources to the network side. Specifically, the reported CRI may be generated by one of the following methods:

Method 1: the terminal side may select to report N = M = 3 optimal resources, where each resource is associated with each piece of sub-configuration information respectively. The 1st CRI corresponds to the resource selection under the first sub-configuration, and thus the reported bit width is log(8) = 3 bits. For example, if the first CRI = 011, the 011 reported by the terminal side is associated with the (3+1)-th resource in the Z1 CSI-RS resources in the first sub-configuration, indicating that a CSI-RS resource selection result under the first sub-configuration is the 4th resource in the Z1 CSI-RS resources in the first sub-configuration. The 2nd CRI corresponds to the resource selection under the second sub-configuration, and thus the reported bit width is the ceiling of log(3) = 2 bits. If the second CRI = 01, the 01 reported by the terminal side is associated with the (1+1)-nd resource in the Z2 CSI-RS resources in the second sub-configuration, indicating that a CSI-RS resource selection result under the second sub-configuration is the 2nd resource in the Z2 CSI-RS resources in the second sub-configuration. The 3rd CRI corresponds to the resource selection under the third sub-configuration, and thus the reported bit width is the ceiling of log(5) = 3 bits. If the third CRI = 001, the 001 reported by the terminal side is associated with the (1+1)-nd resource in the Z3 CSI-RS resources in the third sub-configuration, indicating that a CSI-RS resource selection result under the third sub-configuration is the 2nd resource in the Z3 CSI-RS resources in the third sub-configuration.

Method 2: the terminal side may select to report N = M = 3 optimal resources, where each optimal resource is associated with each piece of sub-configuration information respectively. The 1st CRI corresponds to the resource selection under the first sub-configuration, and the reported bit width is log(Y = 16) = 4 bits. For example, if the first CRI = 0011, the 0011 reported by the terminal side is associated with the (3+1)-th resource in the Y resources, indicating that a CSI-RS resource selection result under the first sub-configuration is the 4th resource in the Y resources. The 2nd CRI corresponds to the resource selection under the second sub-configuration, and the reported bit width is log(Y = 16) = 4 bits. If the second CRI = 1001, the 1001 reported by the terminal side is associated with the (9+1)-th resource in the Y resources, indicating that a CSI-RS resource selection result under the second sub-configuration is the 10th resource in the Y = 16 CSI-RS resources. The 3rd CRI corresponds to the resource selection under the third sub-configuration, and the reported bit width is log(Y = 16) = 4 bits. If the third CRI = 1100, the 1100 reported by the terminal side is associated with the (12+1)-th resource in the Y resources, indicating that a CSI-RS resource selection result under the third sub-configuration is the 13th resource in the Y = 16 CSI-RS resources.

Method 3: the terminal side may select to report N = M = 3 optimal resources, where each optimal resource is associated with each piece of sub-configuration information respectively. The CRI reporting of three resources may be represented by a bitmap of $\sum_{m=1}^{M} Zm = Y$ bits. For example, the selection of three CRIs may be represented by a 16-bit bitmap: 1000000010000001. In this case, the 1st resource represents the CRI selection report corresponding to the first sub-configuration; the 9th resource represents the CRI selection report corresponding to the second sub-configuration; and the 16th resource represents the CRI selection report corresponding to the third sub-configuration.

Implementation 3: the operation of a terminal equipment may include at least one of the following:

Step 1: the terminal equipment receives a CSI-RS resource configuration for channel measurements, wherein the CSI-RS resource configuration contains one CSI-RS resource set containing Y = 32 CSI-RS resources. Specifically, in the resource configuration, a resource port configuration may be performed on the CSI-RS resource set; for example, 'nrofports' = '8', it indicates that each resource in the resource set contains time-frequency resource information of 8 ports, such as REs (Resource Elements).
Step 2: the terminal equipment receives a CSI reporting configuration, which is at least configured to configure M = 3 pieces of sub-configuration information, wherein M = 3 represents scenarios of different physical antenna energy-saving sub-configurations under 8 digital ports.

Specifically, a resource correspondence relationship under each sub-configuration may be performed by configuring M = 3 resource ID lists in the reporting configuration.

Specifically, the *M-th* sub-configuration information in the three pieces of sub-configuration information is associated with Zm CSI-RS resources in the 16 CSI-RS resources in the CSI-RS resource set, where Zm is a positive integer.

FIG. 3B is another schematic diagram of CSI-RS resources according to embodiments of this disclosure.

a-1) As shown in Fig. 3B, the resource IDs corresponding to sub-configuration 1 in the CSI reporting configuration are CSI-RS#0 to #7 (Z1 = 8), which indicates that the 1st sub-configuration information is associated with the first 8 CSI-RS resources in the Y = 32 CSI-RS resources in the CSI-RS resource set; the resource IDs corresponding to sub-configuration 2 in the CSI reporting configuration are CSI-RS#8 to #10 (Z2 = 3), which indicates that the 2nd sub-configuration information is associated with the 9th to 11th CSI-RS resources (a total of 3 resources) in the Y = 32 CSI-RS resources in the CSI-RS resource set; the resource IDs corresponding to sub-configuration 3 in the CSI reporting configuration are CSI-RS#11 to #15 (Z3 = 5), which indicates that the 3rd sub-configuration information is associated with the 12th to 16th CSI-RS resources (a total of 5 resources) in the Y = 32 CSI-RS resources in the CSI-RS resource set.

a-2) As shown in Fig. 3B, Z1 = 8, Z2 = 3, and Z3 = 5. The sum of the values of Zm (i.e., 8 + 3 + 5 = 16) is less than Y.

Step 3-1: optionally, the network side may also notify the terminal side, via additional indication information, to report M' partial sub-configurations out of the M sub-configurations for CSI reporting. The additional indication information may be Medium Access Control Control Element (MAC-CE), Downlink Control Information (DCI), etc. For example, the network side may notify the terminal equipment, via a DCI indication, to only report the CSI corresponding to the first sub-configuration information and the third sub-configuration information.

Step 3-2: the terminal equipment may measure, according to resource lists corresponding to the first and third sub-configurations, the channel state information corresponding to the two sub-configurations, and report the information to the network side.

Step 4: according to channel information (large-scale and/or small-scale) of the 16 resources, the terminal equipment selects N optimal resources and reports index value information of the optimal resources to the network side.

Specifically, the reported CRI may be generated by one of the following methods:

Method 1: the terminal side may select to report N = M' = 2 optimal resources, where each resource is associated with each piece of sub-configuration information respectively. The 1st CRI corresponds to the resource selection under the first sub-configuration, and thus the reported bit width is log(8) = 3 bits. For example, if the first CRI = 011, the 011 reported by the terminal side is associated with the (3+1)-th resource in the Z1 CSI-RS resources in the first sub-configuration, indicating that a CSI-RS resource selection result under the first sub-configuration is the 4th resource in the Z1 CSI-RS resources in the first sub-configuration. The 2nd CRI corresponds to the resource selection under the third sub-configuration, and thus the reported bit width is the ceiling of log(5) = 3 bits. If the second CRI = 001, the 001 reported by the terminal side is associated with the (1+1)-nd resource in the Z3 CSI-RS resources in the third sub-configuration, indicating that a CSI-RS resource selection result under the third sub-configuration is the 2nd resource in the Z3 CSI-RS resources in the third sub-configuration.

Method 2: the terminal side may select to report N = M' = 2 optimal resources, where each optimal resource is associated with each piece of sub-configuration information respectively. The 1st CRI corresponds to the resource selection under the first sub-configuration, and the reported bit width is log(Y = 32) = 5 bits. For example, if the first CRI = 00011, the 00011 reported by the terminal side is associated with the (3+1)-th resource in the Y resources, indicating that a CSI-RS resource selection result under the first sub-configuration is the 4th resource in the Y =32 CSI-RS resources. The 2nd CRI corresponds to the resource selection under the third sub-configuration, and the reported bit width is log(Y = 32) = 5 bits. If the second CRI = 01100, the 01100 reported by the terminal side is associated with the (12+1)-th resource in the Y resources, indicating that a CSI-RS resource selection result under the third sub-configuration is the 13th resource in the Y = 32 CSI-RS resources.

Method 3: the terminal side may select to report N = M' = 2 optimal resources, where each optimal resource is associated with each piece of sub-configuration information respectively. The 1st CRI corresponds to the resource selection under the first sub-configuration, and the reported bit width is

$$\lceil \log(\textstyle\sum_{m=1}^{M} Zm) \rceil = 4$$ bits. For example, if the first CRI = 0011, the 0011 reported by the terminal side is associated with the (3+1)-th resource in resources corresponding to all sub-configurations, indicating that a CSI-RS resource selection result under the first sub-configuration is the 4th resource in the resources corresponding to all sub-configurations. The 2nd CRI corresponds to the resource selection under the third sub-configuration, and the reported bit width is $$\lceil \log(\textstyle\sum_{m=1}^{M} Zm) \rceil = 4$$

bits. If the second CRI = 1101, the 1101 reported by the terminal side is associated with the (13+1)-th resource in resources corresponding to all sub-configurations, indicating that a CSI-RS resource selection result under the third sub-configuration is the 14th resource in the resources corresponding to all sub-configurations.

Method 4: the terminal side may select to report N = M' = 2 optimal resources, where each optimal resource is associated with each piece of sub-configuration information respectively. The CRI reporting of three resources may be represented by a bitmap

of $$\textstyle\sum_{m=1}^{M} Zm$$ bits. For example, the selection of two CRIs may be represented by a 8 + 5 = 13-bit bitmap: 1000000000001. In this case, the 1st resource represents the CRI selection report corresponding to the first sub-configuration; and the 16th resource indicates the CRI selection report corresponding to the third sub-configuration.

Method 5: the terminal side may select to report N = M' = 2 optimal resources, where each optimal resource is associated with each piece of sub-configuration information respectively. The CRI reporting of three resources may be represented by a Y-bit bitmap. For example, the selection of three CRIs may be represented by a 32-bit bitmap: 10000000010000000100000000000000. In this case, the 1st resource represents the CRI selection report corresponding to the first sub-configuration; the 9th resource represents the CRI selection report corresponding to the second sub-configuration; and the 16th resource represents the CRI selection report corresponding to the third sub-configuration.

Implementation 4: the operation of a terminal equipment may include at least one of the following:

Step 1: the terminal equipment receives a CSI-RS resource configuration for channel measurements, wherein the CSI-RS resource configuration contains one CSI-RS resource set containing Y = 32 CSI-RS resources. Specifically, in the resource configuration, a resource port configuration may be performed on the CSI-RS resource set; for example, 'nrofports' = '8', it indicates that each resource in the resource set contains time-frequency resource information of 8 ports, such as REs (Resource Elements).

Step 2: the terminal equipment receives a CSI reporting configuration, which is at least configured to configure M = 3 pieces of sub-configuration information, wherein M = 3 represents scenarios of different physical antenna energy-saving sub-configurations under 8 digital ports.

Specifically, a resource correspondence relationship under each sub-configuration may be performed by configuring M = 3 resource ID lists in the reporting configuration.

Specifically, the *M-th* sub-configuration information in the three pieces of sub-configuration information is associated with Zm CSI-RS resources in the 16 CSI-RS resources in the CSI-RS resource set, where Zm is a positive integer.

a-1) As shown in Fig. 3B, the resource IDs corresponding to sub-configuration 1 in the CSI reporting configuration are CSI-RS#0 to #7 (Z1 = 8), which indicates that the 1st sub-configuration information is associated with the first 8 CSI-RS resources in the Y = 32 CSI-RS resources in the CSI-RS resource set; the resource IDs corresponding to sub-configuration 2 in the CSI reporting configuration are CSI-RS#8 to #10 (Z2 = 3), which indicates that the 2nd sub-configuration information is associated with the 9th to 11th CSI-RS resources (a total of 3 resources) in the Y = 32 CSI-RS resources in the CSI-RS resource set; the resource IDs corresponding to sub-configuration 3 in the CSI reporting configuration are CSI-RS#11 to #15 (Z3 = 5), which indicates that the 3rd sub-configuration information is associated with the 12th to 16th CSI-RS resources (a total of 5 resources) in the Y = 32 CSI-RS resources in the CSI-RS resource set.

a-2) As shown in Fig. 3B, Z1 = 8, Z2 = 3, and Z3 = 5. The sum of the values of Zm (i.e., 8 + 3 + 5 = 16) is less than Y.

Step 3-1: optionally, the network side may also notify the terminal side, via additional indication information, to report M sub-configurations for CSI reporting.

Step 3-2: the terminal equipment may measure, according to resource lists corresponding to three sub-configurations, the channel state information corresponding to the three sub-configurations, and report the information to the network side.

Step 4: according to channel information (large-scale and/or small-scale) of the 16 resources, the terminal equipment selects N = M optimal resources and reports index value information of the optimal resources to the network side. Specifically, the CRI report information may be generated by one of the following methods:

Method 1: the terminal side may select to report N = M = 3 optimal resources, where each resource is associated with each piece of sub-configuration information respectively. The 1st CRI corresponds to the resource selection under the first sub-configuration, and the reported bit width is log(8) = 3 bits. For example, if the first CRI = 011, the 011 reported by the terminal side is associated with the (3+1)-th resource in the Z1 CSI-RS resources in the first sub-configuration, indicating that a CSI-RS resource selection result under the first sub-configuration is the 4th resource in the Z1 CSI-RS resources in the first sub-configuration. The 2nd CRI corresponds to the resource selection under the second sub-configuration, and the reported bit width is the ceiling of log(3) = 2 bits. If the second CRI = 01, the 01 reported by the terminal side is associated with the (1+1)-nd resource in the Z2 CSI-RS resources in the second sub-configuration, indicating that a CSI-RS resource selection result under the second sub-configuration is the 2nd resource in the Z2 CSI-RS resources in the second sub-configuration. The 3rd CRI corresponds to the resource selection under the third sub-configuration, and thus the reported bit width is the ceiling of log(5) = 3 bits. If the third CRI = 001, the 001 reported by the terminal side is associated with the (1+1)-nd resource in the Z3 CSI-RS resources in the third sub-configuration, indicating that a CSI-RS resource selection result under the third sub-configuration is the 2nd resource in the Z3 CSI-RS resources in the third sub-configuration.

Method 2: the terminal side may select to report N = M = 3 optimal resources, where each optimal resource is associated with each piece of sub-configuration information respectively. The 1st CRI corresponds to the resource selection under the first sub-configuration, and the reported bit width is log(Y = 32) = 5 bits. For example, if the first CRI = 00011, the 00011 reported by the terminal side is associated with the (3+1)-th resource in the Y resources, indicating that a CSI-RS resource selection result under the first sub-configuration is the 4th resource in the Y resources. The 2nd CRI corresponds to the resource selection under the second sub-configuration, and the reported bit width is log(Y = 32) = 5 bits. If the second CRI = 01001, the 01001 reported by the terminal side is associated with the (9+1)-th resource in the Y resources, indicating that a CSI-RS resource selection result under the second sub-configuration is the 9th resource in the Y = 32 CSI-RS resources. The 3rd CRI corresponds to the resource selection under the third sub-configuration, and the reported bit width is log(Y = 32) = 5 bits. If the third CRI = 01100, the 01100 reported by the terminal side is associated with the (12+1)-th resource in the Y resources, indicating that a CSI-RS resource selection result under the third sub-configuration is the 13th resource in the Y = 32 CSI-RS resources.

Method 3: the terminal side may select to report N = M = 3 optimal resources, where each optimal resource is associated with each piece of sub-configuration information respectively. The 1st CRI corresponds to the resource selection under the first sub-configuration, and the reported bit width is

$$\lceil \log(\sum_{m=1}^{M} Zm) \rceil = 4$$ bits. For example, if the first CRI = 0011, the 0011 reported by the terminal side is associated with the (3+1)-th resource in resources corresponding to all sub-configurations, indicating that a CSI-RS resource selection result under the first sub-configuration is the 4th resource in the resources corresponding to all sub-configurations. The 2nd CRI corresponds to the resource selection under the second sub-configuration, and the reported bit width is $$\lceil \log(\sum_{m=1}^{M} Zm) \rceil = 4$$

bits. If the second CRI = 1001, the 1001 reported by the terminal side is associated with the (9+1)-th resource in resources corresponding to all sub-configurations, indicating that a CSI-RS resource selection result under the second sub-configuration is the 10th resource in the resources corresponding to all sub-configurations. The 3rd CRI corresponds to the resource selection under the third sub-configuration, and the reported bit width is

$$\lceil \log(\sum_{m=1}^{M} Zm) \rceil = 4$$ bits. If the third CRI = 1100, the 1100 reported by the terminal side is associated with the (12+1)-th resource in resources corresponding to all sub-configurations, indicating that a CSI-RS resource selection result under the third sub-configuration is the 13th resource in resources corresponding to all sub-configurations.

Method 4: the terminal side may select to report N = M = 3 optimal resources, where each optimal resource is associated with each piece of sub-configuration information respectively. The CRI reporting of three resources may be represented by a bitmap of $$\sum_{m=1}^{M} Zm$$ bits. For example, the selection of three CRIs may be represented by a 16-bit bitmap: 1000000010000001. In this case, the 1st resource represents the CRI selection report corresponding to the first sub-configuration; the 9th resource represents the CRI selection report corresponding to the second sub-configuration; and the 16th resource represents the CRI selection report corresponding to the third sub-configuration.

Method 5: the terminal side may select to report N = M = 3 optimal resources, where each optimal resource is associated with each piece of sub-configuration information respectively. The CRI reporting of three resources may be represented by a Y-bit bitmap. For example, the selection of three CRIs may be represented by a 32-bit bitmap: 10000000010000000100000000000000. In this case, the 1st resource represents the CRI selection report corresponding to the first sub-configuration; the 9th resource represents the CRI selection report corresponding to the second sub-configuration; and the 16th resource represents the CRI selection report corresponding to the third sub-configuration.

In some embodiments, at least one piece of sub-configuration information in the M pieces of sub-configuration information in the CSI reporting configuration information may be used as reference sub-configuration information. For example, one piece of sub-configuration information in the M pieces of sub-configuration information may be designated as the reference sub-configuration information.

In some embodiments, the CSI report includes at least channel state information of the reference sub-configuration information.

In some embodiments, the reference sub-configuration may be designated in various manners, such as, a predefined manner (where sub-configuration information with a preset index in the M pieces of sub-configuration information is designated as the reference sub-configuration), or alternatively, a signaling indication manner (where the signaling may include at least one of RRC, MACCE or DCI).

The embodiments of this disclosure further provide another channel state information report generation method, which shall be described from a terminal equipment side. The method includes: receiving CSI-RS resource configuration information and CSI report configuration information, wherein, the CSI-RS (channel state information reference signal) resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and generating a CSI report according to the CSI-RS resource configuration information and the CSI report configuration information, wherein the CSI report includes N CSI-RS resource indices (CRIs), wherein, at least one piece of sub-configuration information in the M pieces of sub-configuration information in the CSI reporting configuration information may be used as reference sub-configuration information.

In some embodiments, the CSI report includes at least channel state information of the reference sub-configuration information.

In some embodiments, the reference sub-configuration may be designated in various manners, such as, a predefined manner (where sub-configuration information with a preset index in the M pieces of sub-configuration information is designated as the reference sub-configuration), or alternatively, a signaling indication manner (where the signaling may include at least one of RRC, MACCE or DCI).

In some embodiments, the "energy-saving mode" may also be replaced with: power-saving mode, sleep mode, abnormal mode, inactive mode, a mode after a network device adjusts the ratio of the Energy Per Resource Element (EPRE) of the Physical Downlink Shared Channel (PDSCH) to the EPRE, a mode after a network device adjusts the CSI-RS resource configuration, a mode after a network device adjusts the CSI reporting configuration, a mode after adjustment of spatial domain/energy domain elements, etc. This disclosure does not impose any limitation herein.

In some embodiments, the adjustment of spatial domain elements includes a network device adjusting the number of the spatial domain elements; the adjustment of energy domain elements includes the network device adjusting the transmission power of a reference signal and/or the transmission power of a data channel. This disclosure is not limited thereto.

In some embodiments, the spatial domain elements include at least one of the following: antennas, antenna ports, logical ports, reference signal ports, antenna factors, antenna elements, or antenna units; the energy domain elements include at least one of the following: reference signal transmission power, reference signal transmission power offset, data channel transmission power, or data channel transmission power offset. This disclosure is not limited thereto.

In some embodiments, the reference signals, used for wireless link quality measurement, associated with the adjustment of spatial domain elements and/or energy domain elements are: a synchronization signal block (SSB), or a periodic channel state information reference signal for tracking (CSI-RS for tracking), etc.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It can be known form the above embodiments that, through receiving, by the terminal equipment, CSI-RS resource configuration information and CSI reporting configuration information containing at least one piece of sub-configuration information, and generating a CSI report including at least one CSI-RS resource index according to the CSI-RS resource configuration information and CSI reporting configuration information, the terminal equipment is enabled to perform joint channel measurement on one or more sub-configurations and report the measurement results, which facilitates efficient and accurate CSI measurement by the terminal equipment, and ensures data transmission performance.

Embodiments of the second aspect

The embodiments of this disclosure provide a channel state information report generation method, applied to a network device side. The embodiments of the second aspect may be implemented in combination with the embodiments of the first aspect or implemented separately. The contents identical to those in the embodiments of the first aspect are not going to be described herein any further.

FIG. 4 is a schematic diagram of a channel state information report reception method according to embodiments of this disclosure; as shown in Fig. 4, the method includes:

401, channel state information reference signal (CSI-RS) resource configuration information and CSI report configuration information are transmitted to a terminal equipment,

wherein the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and

402, a CSI report generated by the terminal equipment according to the CSI-RS resource configuration information and the CSI report configuration information is received, wherein the CSI report includes N CSI-RS resource indices (CRIs), where N is an integer greater than or equal to 1.

In some embodiments, the CSI report configuration information is associated with one CSI-RS resource set in the at least one CSI-RS resource set;

and the *m-th* sub-configuration information in the M pieces of sub-configuration information is associated with Zm CSI-RS resources in Y CSI-RS resources in one CSI-RS resource set in the at least one CSI-RS resource set, where Zm is a positive integer, Zm $\leq$ Y, and $1 \leq m \leq M$.

In some embodiments, the *m-th* sub-configuration information includes IDs of the Zm CSI-RS resources.

In some embodiments, $\sum_{m=1}^{M} Zm \leq Y$.

In some embodiments, the number of CSI-RS resources (i.e., the value of Zm) associated with each sub-configuration information in the M pieces of sub-configuration information is identical or different.

In some embodiments, a value of each CRI in the N CRIs is associated with one piece of sub-configuration information in the M pieces of sub-configuration information, and/or a value of each CRI in the N CRIs is associated with all sub-configuration information in the M pieces of sub-configuration information.

In some embodiments, a value of the *n-th* CRI in the N CRIs is i_n, and the *n-th* CRI is associated with the *(i_n+1)-th* CSI-RS resource in the Zm CSI-RS resources associated with the *m-th* sub-configuration information in the M pieces of sub-configuration information, where $1 \leq n \leq N$, $1 \leq m \leq M$, and $N \leq M$.

In some embodiments, a bitwidth of the *n-th* CRI in the N CRIs is $\lceil \log(Zm) \rceil$ bits.

In some embodiments, a value of the *n-th* CRI in the N CRIs is i_n, and the *n-th* CRI is associated with the *(i_n+1)-th* CSI-RS resource in CSI-RS resources associated with the M pieces of sub-configuration information, the CSI-RS resources associated with the M pieces of sub-configuration information including a set of CSI-RS resources associated with each sub-configuration information in the M pieces of sub-configuration information, where $1 \leq n \leq N$, and $N \leq M$.

In some embodiments, a bitwidth of the *n-th* CRI in the N CRIs is $\lceil \log(\sum_{m=1}^{M} Zm) \rceil$ bits, where Zm is the number of CSI-RS resources to which the *m-th* sub-configuration information in the M pieces of sub-configuration information corresponds, and $1 \leq m \leq M$; or, a bitwidth of the N CRIs is $\sum_{m=1}^{M} Zm$ bits.

In some embodiments, a value of the *n-th* CRI in the N CRIs is i_n, and the *n-th* CRI is associated with the *(i_n+1)-th* CSI-RS resource in the Y CSI-RS resources in one CSI-RS resource set in the at least one CSI-RS resource set, where $1 \leq n \leq N$.

In some embodiments, a bitwidth of the *n-th* CRI in the N CRIs is $\lceil \log(Y) \rceil$ bits; or a bitwidth of the N CRIs is Y bits.

In some embodiments, the CSI report configuration information is associated with one CSI-RS resource set in the at least one CSI-RS resource set; and each sub-configuration information in the M pieces of sub-configuration information is associated with Y CSI-RS resources in one CSI-RS resource set in the at least one CSI-RS resource set.

In some embodiments, the *m-th* sub-configuration information in the M pieces of sub-configuration information comprises one piece of port indication information, where $1 \leq m \leq M$.

In some embodiments, a value of each CRI in the N CRIs is associated with one piece of sub-configuration information in the M pieces of sub-configuration information, and/or a value of each CRI in the N CRIs is associated with all sub-configuration information in the M pieces of sub-configuration information.

In some embodiments, a value of the *n-th* CRI in the N CRIs is i_n, and the *n-th* CRI is associated with the *(i_n+1)-th* CSI-RS resource in the Y CSI-RS resources in one CSI-RS resource set in the at least one CSI-RS resource set, where $1 \leq n \leq N$.

In some embodiments, a bitwidth of the *n-th* CRI in the N CRIs is $\lceil \log(Y) \rceil$ bits; or a bitwidth of the N CRIs is Y bits.

In some embodiments, at least one piece of sub-configuration information in the M pieces of sub-configuration information in the CSI reporting configuration information may be used as reference sub-configuration information. For example, one piece of sub-configuration information in the M pieces of sub-configuration information may be designated as the reference sub-configuration information.

In some embodiments, the CSI report includes at least channel state information of the reference sub-configuration information.

In some embodiments, the reference sub-configuration may be designated in various manners, such as, a predefined manner (where sub-configuration information with a preset index in the M pieces of sub-configuration information is designated as the reference sub-configuration), or alternatively, a signaling indication manner (where the signaling may include at least one of RRC, MACCE or DCI).

The embodiments of this disclosure further provide another channel state information report generation method, which shall be described from a network device side. The method includes: transmitting CSI-RS resource configuration information and CSI report configuration information, wherein, the CSI-RS (channel state information reference signal) resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and receiving a CSI report generated according to the CSI-RS resource configuration information and the CSI report configuration information, wherein the CSI report includes N CSI-RS resource indices (CRIs), wherein, at least one piece of sub-configuration information in the M pieces of sub-configuration information in the CSI reporting configuration information may be used as reference sub-configuration information.

In some embodiments, the CSI report includes at least channel state information of the reference sub-configuration information.

In some embodiments, the reference sub-configuration may be designated in various manners, such as, a predefined manner (where sub-configuration information with a preset index in the M pieces of sub-configuration information is designated as the reference sub-configuration), or alternatively, a signaling indication manner (where the signaling may include at least one of RRC, MACCE or DCI).

It should be noted that FIG. 4 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 4.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be known form the above embodiments that, through receiving, by the terminal equipment, CSI-RS resource configuration information and CSI reporting configuration information containing at least one piece of sub-configuration information, and generating a CSI report including at least one CSI-RS resource index according to the CSI-RS resource configuration information and CSI reporting configuration information, the terminal equipment is enabled to perform joint channel measurement on one or more sub-configurations and report the measurement results, which facilitates efficient and accurate CSI measurement by the terminal equipment, ensures data transmission performance, and achieves network energy conservation.

Embodiments of the third aspect

Embodiments of this disclosure provide a channel state information report generation apparatus. The apparatus may be, for example, a terminal equipment or one or some components or assemblies configured on a terminal equipment, with contents identical to those in the embodiments of the first aspect being not going to be described herein any further.

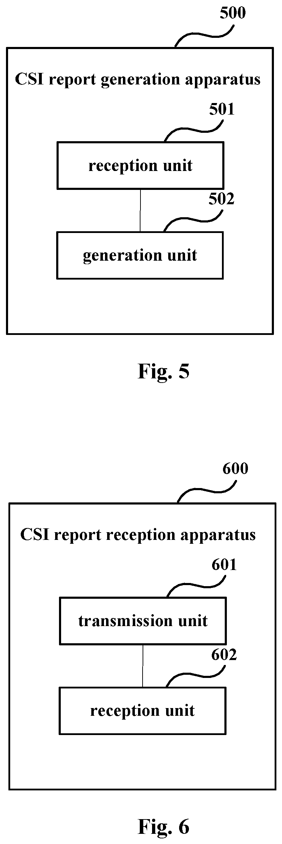

FIG. 5 is a schematic diagram of a channel state information report generation apparatus according to embodiments of this disclosure. As shown in FIG. 5, a channel state information report generation apparatus 500 includes:

a reception unit 501 configured to receive channel state information reference signal (CSI-RS) resource configuration information and CSI report configuration information,

wherein the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and

a generation unit 502 configured to generate a CSI report according to the CSI-RS resource configuration information and the CSI report configuration information, wherein the CSI report includes N CSI-RS resource indices (CRIs), where N is an integer greater than or equal to 1.

In some embodiments, the CSI report configuration information is associated with one CSI-RS resource set in the at least one CSI-RS resource set;

and the *m-th* sub-configuration information in the M pieces of sub-configuration information is associated with Zm CSI-RS resources in Y CSI-RS resources in one CSI-RS resource set in the at least one CSI-RS resource set, where Zm is a positive integer, $Zm \leq Y$, and $1 \leq m \leq M$.

In some embodiments, the *m-th* sub-configuration information includes IDs of the Zm CSI-RS resources.

In some embodiments, $\sum_{m=1}^{M} Zm \leq Y$.

In some embodiments, the number of CSI-RS resources (i.e., the value of Zm) associated with each sub-configuration information in the M pieces of sub-configuration information is identical or different.

In some embodiments, a value of each CRI in the N CRIs is associated with one piece of sub-configuration information in the M pieces of sub-configuration information, and/or a value of each CRI in the N CRIs is associated with all sub-configuration information in the M pieces of sub-configuration information.

In some embodiments, a value of the *n-th* CRI in the N CRIs is i_n, and the *n-th* CRI is associated with the *(i_n+1)-th* CSI-RS resource in the Zm CSI-RS resources associated with the *m-th* sub-configuration information in the M pieces of sub-configuration information, where $1 \leq n \leq N$, $1 \leq m \leq M$, and $N \leq M$.

In some embodiments, a bitwidth of the *n-th* CRI in the N CRIs is $\lceil \log(Zm) \rceil$ bits.

In some embodiments, a value of the *n-th* CRI in the N CRIs is i_n, and the *n-th* CRI is associated with the *(i_n+1)-th* CSI-RS resource in CSI-RS resources associated with the M pieces of sub-configuration information, the CSI-RS resources associated with the M pieces of sub-configuration information including a set of CSI-RS resources associated with each sub-configuration information in the M pieces of sub-configuration information, where $1 \leq n \leq N$, and $N \leq M$.

In some embodiments, a bitwidth of the *n-th* CRI in the N CRIs is $\lceil \log(\sum_{m=1}^{M} Zm) \rceil$ bits, where Zm is the number of CSI-RS resources to which the *m-th* sub-configuration information in the M pieces of sub-configuration information corresponds, and $1 \leq m \leq M$; or, a bitwidth of the N CRIs is $\sum_{m=1}^{M} Zm$ bits.

In some embodiments, a value of the *n-th* CRI in the N CRIs is i_n, and the *n-th* CRI is associated with the *(i_n+1)-th* CSI-RS resource in the Y CSI-RS resources in one CSI-RS resource set in the at least one CSI-RS resource set, where $1 \leq n \leq N$.

In some embodiments, a bitwidth of the *n-th* CRI in the N CRIs is $\lceil \log(Y) \rceil$ bits; or a bitwidth of the N CRIs is Y bits.

In some embodiments, the CSI report configuration information is associated with one CSI-RS resource set in the at least one CSI-RS resource set; and each sub-configuration information in the M pieces of sub-configuration information is associated with Y CSI-RS resources in one CSI-RS resource set in the at least one CSI-RS resource set.

In some embodiments, the *m-th* sub-configuration information in the M pieces of sub-configuration information includes one piece of port indication information, where $1 \leq m \leq M$.

In some embodiments, a value of each CRI in the N CRIs is associated with one piece of sub-configuration information in the M pieces of sub-configuration information, and/or a value of each CRI in the N CRIs is associated with all sub-configuration information in the M pieces of sub-configuration information.

In some embodiments, a value of the *n-th* CRI in the N CRIs is i_n, and the *n-th* CRI is associated with the *(i_n+1)-th* CSI-RS resource in the Y CSI-RS resources in one CSI-RS resource set in the at least one CSI-RS resource set, where $1 \leq n \leq N$.

In some embodiments, a bitwidth of the *n-th* CRI in the N CRIs is $\lceil \log(Y) \rceil$ bits; or a bitwidth of the N CRIs is Y bits.

In some embodiments, at least one piece of sub-configuration information in the M pieces of sub-configuration information in the CSI reporting configuration information may be used as reference sub-configuration information. For example, one piece of sub-configuration information in the M pieces of sub-configuration information may be designated as the reference sub-configuration information.

In some embodiments, the CSI report includes at least channel state information of the reference sub-configuration information.

In some embodiments, the reference sub-configuration may be designated in various manners, such as, a predefined manner (where sub-configuration information with a preset index in the M pieces of sub-configuration information is designated as the reference sub-configuration), or alternatively, a signaling indication manner (where the signaling may include at least one of RRC, MACCE or DCI).

The embodiments of this disclosure further provide another channel state information report generation method, which shall be described from a terminal equipment side. The method includes: receiving CSI-RS resource configuration information and CSI report configuration information, wherein, the CSI-RS (channel state information reference signal) resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and generating a CSI report according to the CSI-RS resource configuration information and the CSI report configuration information, wherein the CSI report includes N CSI-RS resource indices (CRIs), wherein, at least one piece of sub-configuration information in the M pieces of sub-configuration information in the CSI reporting configuration information may be used as reference sub-configuration information.

In some embodiments, the CSI report includes at least channel state information of the reference sub-configuration information.

In some embodiments, the reference sub-configuration may be designated in various manners, such as, a predefined manner (where sub-configuration information with a preset index in the M pieces of sub-configuration information is designated as the reference sub-configuration), or alternatively, a signaling indication manner (where the signaling may include at least one of RRC, MACCE or DCI).

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto. The channel state information report generation apparatus 500 may further include other components or modules, and reference may be made to the related techniques for specific contents of these components or modules.

Furthermore, for the sake of simplicity, connection relationships between the components or modules or signal profiles thereof are only illustrated in FIG. 5. However, it should be understood by those skilled in the art that such related techniques as bus connection may be adopted. And the above components or modules may be implemented by hardware, such as a processor, a memory, a transmitter, and a receiver, which are not limited in the embodiment of this disclosure.

It can be known form the above embodiments that, through receiving, by the terminal equipment, CSI-RS resource configuration information and CSI reporting configuration information containing at least one piece of sub-configuration information, and generating a CSI report including at least one CSI-RS resource index according to the CSI-RS resource configuration information and CSI reporting configuration information, the terminal equipment is enabled to perform joint channel measurement on one or more sub-configurations and report the measurement results, which facilitates efficient and accurate CSI measurement by the terminal equipment, ensures data transmission performance, and achieves network energy conservation.

Embodiments of the fourth aspect

Embodiments of this disclosure provide a channel state information report generation apparatus. The apparatus may be, for example, a network device or one or some components or assemblies configured on a network device, with contents identical to those in the embodiments of the second aspect being not going to be described herein any further.

FIG. 6 is a schematic diagram of a channel state information report reception apparatus according to embodiments of this disclosure. As shown in FIG. 6, a channel state information report reception apparatus 600 includes:

> a transmission unit 601 configured to transmit channel state information reference signal (CSI-RS) resource configuration information and CSI report configuration information to a terminal equipment,
> wherein the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and
> a reception unit 602 configured to receive a CSI report generated by the terminal equipment according to the CSI-RS resource configuration information and the CSI report configuration information, wherein the CSI report includes N CSI-RS resource indices (CRIs), where N is an integer greater than or equal to 1.

In some embodiments, the CSI report configuration information is associated with one CSI-RS resource set in the at least one CSI-RS resource set;
and the *m-th* sub-configuration information in the M pieces of sub-configuration information is associated with Zm CSI-RS resources in Y CSI-RS resources in one CSI-RS resource set in the at least one CSI-RS resource set, where Zm is a positive integer, Zm $\leq$ Y, and 1 $\leq$ m $\leq$ M.

In some embodiments, the *m-th* sub-configuration information includes IDs of the Zm CSI-RS resources.

In some embodiments, $\sum_{m=1}^{M} Zm \leq Y$.

In some embodiments, the number of CSI-RS resources (i.e., the value of Zm) associated with each sub-configuration information in the M pieces of sub-configuration information is identical or different.

In some embodiments, a value of each CRI in the N CRIs is associated with one piece of sub-configuration information in the M pieces of sub-configuration information, and/or a value of each CRI in the N CRIs is associated with all sub-configuration information in the M pieces of sub-configuration information.

In some embodiments, a value of the *n-th* CRI in the N CRIs is i_n, and the *n-th* CRI is associated with the *(i_n+1)-th* CSI-RS resource in the Zm CSI-RS resources associated with the *m-th* sub-configuration information in the M pieces of sub-configuration information, where 1 $\leq$ n $\leq$ N, 1 $\leq$ m $\leq$ M, and N $\leq$ M.

In some embodiments, a bitwidth of the *n-th* CRI in the N CRIs is $\lceil \log(Zm) \rceil$ bits.

In some embodiments, a value of the *n-th* CRI in the N CRIs is i_n, and the *n-th* CRI is associated with the *(i_n+1)-th* CSI-RS resource in CSI-RS resources associated with the M pieces of sub-configuration information, the CSI-RS resources associated with the M pieces of sub-configuration information including a set of CSI-RS resources associated with each sub-configuration information in the M pieces of sub-configuration information, where 1 $\leq$ n $\leq$ N, and N $\leq$ M.

In some embodiments, a bitwidth of the *n-th* CRI in the N CRIs is $\lceil \log(\sum_{m=1}^{M} Zm) \rceil$ bits, where Zm is the number of CSI-RS resources to which the *m-th* sub-configuration information in the M pieces of sub-configuration information corresponds, and 1 $\leq$ m $\leq$ M; or, a bitwidth of the N CRIs is $\sum_{m=1}^{M} Zm$ bits.

In some embodiments, a value of the *n-th* CRI in the N CRIs is i_n, and the *n-th* CRI is associated with the *(i_n+1)-th* CSI-RS resource in the Y CSI-RS resources in one CSI-RS resource set in the at least one CSI-RS resource set, where 1 $\leq$ n $\leq$ N.

In some embodiments, a bitwidth of the *n-th* CRI in the N CRIs is $\lceil \log(Y) \rceil$ bits; or a bitwidth of the N CRIs is Y bits.

In some embodiments, the CSI report configuration information is associated with one CSI-RS resource set in the at least one CSI-RS resource set;
and each sub-configuration information in the M pieces of sub-configuration information is associated with Y CSI-RS resources in one CSI-RS resource set in the at least one CSI-RS resource set.

In some embodiments, the *m-th* sub-configuration information in the M pieces of sub-configuration information includes one piece of port indication information, where 1 $\leq$ m $\leq$ M.

In some embodiments, a value of each CRI in the N CRIs is associated with one piece of sub-configuration information in the M pieces of sub-configuration information, and/or a value of each CRI in the N CRIs is associated with all sub-configuration information in the M pieces of sub-configuration information.

In some embodiments, a value of the *n-th* CRI in the N CRIs is i_n, and the *n-th* CRI is associated with the *(i_n+1)-th* CSI-RS resource in the Y CSI-RS resources in one CSI-RS resource set in the at least one CSI-RS resource set, where 1 $\leq$ n $\leq$ N.

In some embodiments, a bitwidth of the *n-th* CRI in the N CRIs is $\lceil \log(Y) \rceil$ bits; or a bitwidth of the N CRIs is Y bits.

In some embodiments, at least one piece of sub-configuration information in the M pieces of sub-configuration information in the CSI reporting configuration information may be used as reference sub-configuration information. For example, one piece of sub-configuration information in the M pieces of sub-configuration information may be designated as the reference sub-configuration information.

In some embodiments, the CSI report includes at least channel state information of the reference sub-configuration information.

In some embodiments, the reference sub-configuration may be designated in various manners, such as, a predefined manner (where sub-configuration information with a preset index in the M pieces of sub-configuration information is designated as the reference sub-configuration), or alternatively, a signaling indication manner (where the signaling may include at least one of RRC, MACCE or DCI).

The embodiments of this disclosure further provide another channel state information report generation method, which shall be described from a network device side. The method includes: transmitting CSI-RS resource configuration information and CSI report configuration information, wherein, the CSI-RS (channel state information reference signal) resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and receiving a CSI report generated according to the CSI-RS resource configuration information and the CSI report configuration information, wherein the CSI report includes N CSI-RS resource indices (CRIs), wherein, at least one piece of sub-configuration information in the M pieces of sub-configuration information in the CSI reporting configuration information may be used as reference sub-configuration information.

In some embodiments, the CSI report includes at least channel state information of the reference sub-configuration information.

In some embodiments, the reference sub-configuration may be designated in various manners, such as, a predefined manner (where sub-configuration information with a preset index in the M pieces of sub-configuration information is designated as the reference sub-configuration), or alternatively, a signaling indication manner (where the signaling may include at least one of RRC, MACCE or DCI).

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto. The channel state information report reception apparatus 600 may further include other components or modules, and reference may be made to the related techniques for specific contents of these components or modules.

Furthermore, for the sake of simplicity, connection relationships between the components or modules or signal profiles thereof are only illustrated in FIG. 6. However, it should be understood by those skilled in the art that such related techniques as bus connection may be adopted. And the above components or modules may be implemented by hardware, such as a processor, a memory, a transmitter, and a receiver, which are not limited in the embodiments of this disclosure.

It can be known form the above embodiments that, through receiving, by the terminal equipment, CSI-RS resource configuration information and CSI reporting configuration information containing at least one piece of sub-configuration information, and generating a CSI report including at least one CSI-RS resource index according to the CSI-RS resource configuration information and CSI reporting configuration information, the terminal equipment is enabled to perform joint channel measurement on one or more sub-configurations and report the measurement results, which facilitates efficient and accurate CSI measurement by the terminal equipment, ensures data transmission performance, and achieves network energy conservation.

Embodiments of the fifth aspect

The embodiments of this disclosure further provide a communications system, which shall be described from a first terminal equipment side, and reference may be made to FIG. 1, with contents identical to those in the embodiments of the first to the fourth aspects being not going to be described herein any further.

In some embodiments, the communication system 100 may at least include: a network device and a terminal equipment, wherein, the terminal equipment is configured to receive channel state information reference signal (CSI-RS) resource configuration information and CSI report configuration information, wherein, the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1, and to generate a CSI report according to the CSI-RS resource configuration information and the CSI report configuration information, wherein the CSI report includes N CSI-RS resource indices (CRIs), where N is an integer greater than or equal to 1; and the network device is configured to transmit the CSI-RS resource configuration information and the CSI report configuration information and receive the CSI report.

The embodiments of this disclosure further provide a network device, such as a base station; however, this disclosure is not limited thereto, and it may also be other network devices.

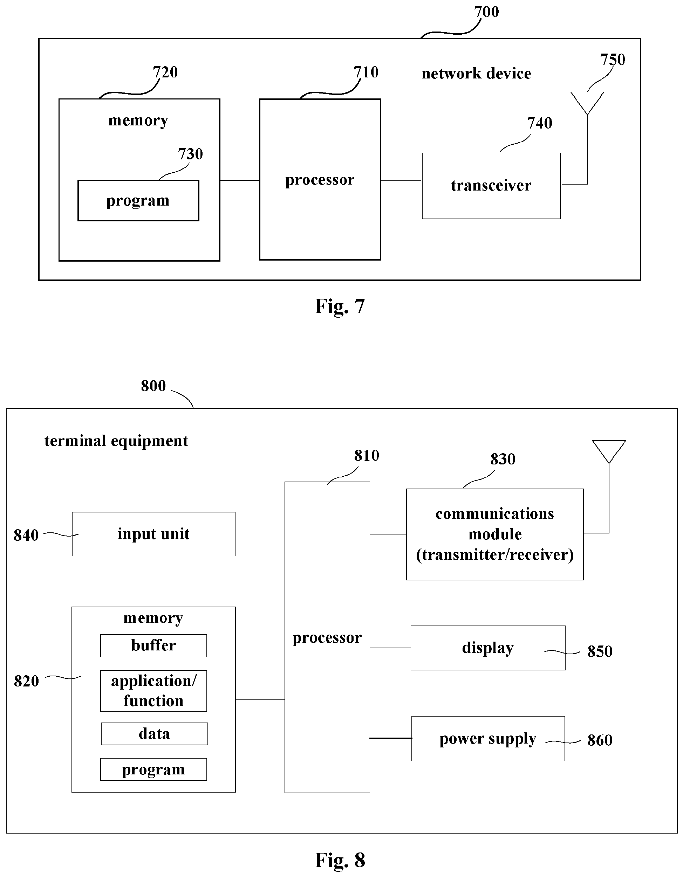

FIG. 7 is a schematic diagram of the composition of a network device according to embodiments of this disclosure. As shown in FIG. 7, a network device 700 may include a processor 710 (such as a central processing unit (CPU)) and a memory 720, the memory 720 being coupled to the processor 710. The memory 720 may store various data, and furthermore, it may store a program 730 for data processing, and execute the program 730 under control of the processor 710.

For example, the processor 710 may be configured to execute a program to implement the method as described in the embodiments of the second aspect. For example, the processor 710 may be configured to perform the following controlling: transmitting to a terminal equipment CSI-RS resource configuration information and CSI report configuration information, wherein, the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and receiving a CSI report generated by the terminal equipment according to the CSI-RS resource configuration information and the CSI report configuration information, wherein the CSI report includes N CSI-RS resource indices (CRIs), where N is an integer greater than or equal to 1.

Furthermore, as shown in FIG. 7, the network device 700 may further include a transceiver 740, and an antenna 750, etc. Functions of the above components are similar to those in the related art, and shall not be described herein any further. It should be noted that the network device 700 does not necessarily include all the parts shown in FIG. 7, and furthermore, the network device 700 may include parts not shown in FIG. 7, and the related art may be referred to.

The embodiments of this disclosure further provide a terminal equipment; however, this disclosure is not limited thereto, and it may also be another equipment.

FIG. 8 is a schematic diagram of a terminal equipment of an embodiment of this disclosure. As shown in FIG. 8, a terminal equipment 800 may include a processor 810 and a memory 820, the memory 820 storing data and a program and being coupled to the processor 810. It should be noted that this figure is illustrative only, and other types of structures may also be used, so as to supplement or replace this structure and achieve a telecommunications function or other functions.

For example, the processor 810 may be configured to execute a program to implement the method as described in the embodiments of the first aspect. For example, the processor 810 may be configured to perform the following controlling: receiving CSI-RS resource configuration information and CSI report configuration information, wherein, the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and generating a CSI report according to the CSI-RS resource configuration information and the CSI report configuration information, wherein the CSI report includes N CRIs, where N is an integer greater than or equal to 1.

As shown in FIG. 8, the terminal equipment 800 may further include a communications module 830, an input unit 840, a display 850, and a power supply 860. Functions of the above components are similar to those in the related art, which shall not be described herein any further. It should be noted that the terminal equipment 800 does not necessarily include all the parts shown in FIG. 8, and the above components are not necessary; furthermore, the terminal equipment 800 may include parts not shown in FIG. 8, and the related art may be referred to.

Embodiments of this disclosure provide a computer readable program, which, when executed in a terminal equipment, causes the terminal equipment to implement the method as described in the embodiments of the first aspect.

Embodiments of this disclosure provide a computer storage medium, including a computer readable program, which causes a terminal equipment to implement the method as described in the embodiments of the first aspect.

Embodiments of this disclosure provide a computer readable program, which, when executed in a terminal equipment, causes the terminal equipment to implement the method as described in the embodiments of the second aspect.

Embodiments of this disclosure provide a computer storage medium, including a computer readable program, which causes a terminal equipment to implement the method as described in the embodiments of the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

As to implementations containing the above embodiments, following supplements are further disclosed.

A method of a terminal equipment side:

1. A channel state information (CSI) report generation method, configured in a terminal equipment, the method including:

receiving channel state information reference signal (CSI-RS) resource configuration information and CSI report configuration information, wherein the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and
generating a CSI report according to the CSI-RS resource configuration information and the CSI report configuration information, wherein the CSI report includes N CSI-RS resource indices (CRIs), where N is an integer greater than or equal to 1.

2. The method according to supplement 1, wherein,

the CSI report configuration information is associated with one CSI-RS resource set in the at least one CSI-RS resource set;
and the *m-th* sub-configuration information in the M pieces of sub-configuration information is associated with $Z_m$ CSI-RS resources in Y CSI-RS resources in one CSI-RS resource set in the at least one CSI-RS resource set, where $Z_m$ is a positive integer, $Z_m \leq Y$, and $1 \leq m \leq M$.

3. The method according to supplement 2, wherein, the *m-th* sub-configuration information includes IDs of the $Z_m$ CSI-RS resources.

4. The method according to supplement 3, wherein,

$$\sum_{m=1}^{M} Z_m \leq Y.$$

5. The method according to supplement 2, wherein, the number of CSI-RS resources (a value of $Z_m$) associated with each sub-configuration information in the M pieces of sub-configuration information is identical or different.

5a. The method according to supplement 2, wherein, a value of each CRI in the N CRIs is associated with one piece of sub-configuration information in the M pieces of sub-configuration information, and/or a value of each CRI in the N CRIs is associated with all sub-configuration information in the M pieces of sub-configuration information.

6. The method according to supplement 2, wherein, a value of the *n-th* CRI in the N CRIs is $i\_n$, and the *n-*

*th* CRI is associated with the *(i_n+1)-th* CSI-RS resource in the Zm CSI-RS resources associated with the *m-th* sub-configuration information in the M pieces of sub-configuration information, where $1 \leq n \leq N$, $1 \leq m \leq M$, and $N \leq M$.

7. The method according to supplement 6, wherein, a bitwidth of the *n-th* CRI in the N CRIs is

$$\lceil \log(Zm) \rceil$$ bits.

8. The method according to supplement 2, wherein, a value of the *n-th* CRI in the N CRIs is i_n, and the *n-th* CRI is associated with the *(i_n+1)-th* CSI-RS resource in CSI-RS resources associated with the M pieces of sub-configuration information, the CSI-RS resources associated with the M pieces of sub-configuration information including a set of CSI-RS resources associated with each sub-configuration information in the M pieces of sub-configuration information, where $1 \leq n \leq N$, and $N \leq M$.

9. The method according to supplement 8, wherein, a bitwidth of the *n-th* CRI in the N CRIs is

$$\lceil \log(\textstyle\sum_{m=1}^{M} Zm) \rceil$$ bits, where Zm is the number of CSI-RS resources to which the *m-th* sub-configuration information in the M pieces of sub-configuration information corresponds, and $1 \leq m \leq M$; or, a

bitwidth of the N CRIs is $\sum_{m=1}^{M} Zm$ bits.

10. The method according to supplement 2, wherein, a value of the *n-th* CRI in the N CRIs is i_n, and the *n-th* CRI is associated with the *(i_n+1)-th* CSI-RS resource in the Y CSI-RS resources in one CSI-RS resource set in the at least one CSI-RS resource set, where $1 \leq n \leq N$.

11. The method according to supplement 10, wherein,

a bitwidth of the *n-th* CRI in the N CRIs is

$$\lceil \log(Y) \rceil$$ bits; or
a bitwidth of the N CRIs is Y bits.

12. The method according to supplement 1, wherein,

the CSI report configuration information is associated with one CSI-RS resource set in the at least one CSI-RS resource set; and each sub-configuration information in the M pieces of sub-configuration information is associated with Y CSI-RS resources in one CSI-RS resource set in the at least one CSI-RS resource set.

13. The method according to supplement 12, wherein, the *m-th* sub-configuration information in the M pieces of sub-configuration information includes one piece of port indication information, where $1 \leq m \leq M$.

13a. The method according to supplement 12, wherein, a value of each CRI in the N CRIs is associated with one piece of sub-configuration information in the M pieces of sub-configuration information, and/or a value of each CRI in the N CRIs is associated with all sub-configuration information in the M pieces of sub-configuration information.

14. The method according to supplement 12, wherein, a value of the *n-th* CRI in the N CRIs is i_n, and the *n-th* CRI is associated with the *(i_n+1)-th* CSI-RS resource in the Y CSI-RS resources in one CSI-RS resource set in the at least one CSI-RS resource set, where $1 \leq n \leq N$.

15. The method according to supplement 14, wherein,

a bitwidth of the *n-th* CRI in the N CRIs is

$$\lceil \log(Y) \rceil$$ bits; or
a bitwidth of the N CRIs is Y bits.

16. The method according to supplement 1, wherein, at least one piece of sub-configuration information in the M pieces of sub-configuration information in the CSI reporting configuration information is used as reference sub-configuration information.

17. The method according to supplement 16, wherein, the CSI report includes at least channel state information of the reference sub-configuration information.

18. The method according to supplement 16, wherein, the reference sub-configuration is indicated via predefinition or signaling.

19. A channel state information (CSI) report generation method, configured in a terminal equipment, the method including:

receiving channel state information reference signal (CSI-RS) resource configuration information and CSI report configuration information, wherein the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and generating a CSI report according to the CSI-RS resource configuration information and the CSI report configuration information, wherein at least one piece of sub-configuration information in the M pieces of sub-configuration information in the CSI reporting configuration information is used as reference sub-configuration information.

20. The method according to supplement 19, wherein,
the CSI report includes at least channel state information of the reference sub-configuration information.

21. The method according to supplement 19, wherein,
the reference sub-configuration is indicated via predefinition or signaling.

A method of a network device side:

1. A channel state information (CSI) report reception method, configured in a network device, the method including:

transmitting channel state information reference signal (CSI-RS) resource configuration information and CSI report configuration information to a terminal equipment,
wherein the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and
receiving a CSI report generated by the terminal equipment according to the CSI-RS resource configuration information and the CSI report configuration information, wherein the CSI report includes N CSI-RS resource indices (CRIs), where N is an integer greater than or equal to 1.

2. The method according to supplement 1, wherein,

the CSI report configuration information is associated with one CSI-RS resource set in the at least one CSI-RS resource set;
and the *m-th* sub-configuration information in the M pieces of sub-configuration information is associated with Zm CSI-RS resources in Y CSI-RS resources in one CSI-RS resource set in the at least one CSI-RS resource set, where Zm is a positive integer, Zm ≤ Y, and 1 ≤ m ≤ M.

3. The method according to supplement 2, wherein,
the *m-th* sub-configuration information includes IDs of the Zm CSI-RS resources.

4. The method according to supplement 3, wherein,

$$\sum_{m=1}^{M} \mathrm{Zm} \leq \mathrm{Y}.$$

5. The method according to supplement 2, wherein,
the number of CSI-RS resources (a value of Zm) associated with each sub-configuration information in the M pieces of sub-configuration information is identical or different.

5a. The method according to supplement 2, wherein,
a value of each CRI in the N CRIs is associated with one piece of sub-configuration information in the M pieces of sub-configuration information, and/or a value of each CRI in the N CRIs is associated with all sub-configuration information in the M pieces of sub-configuration information.

6. The method according to supplement 2, wherein,
a value of the *n-th* CRI in the N CRIs is i_n, and the *n-th* CRI is associated with the *(i_n+1)-th* CSI-RS resource in the Zm CSI-RS resources associated with the *m-th* sub-configuration information in the M pieces of sub-configuration information, where 1 ≤ n ≤ N, 1 ≤ m ≤ M, and N ≤ M.

7. The method according to supplement 6, wherein,
a bitwidth of the *n-th* CRI in the N CRIs is

$\lceil \log(\mathrm{Zm}) \rceil$ bits.

8. The method according to supplement 2, wherein,
a value of the *n-th* CRI in the N CRIs is i_n, and the *n-th* CRI is associated with the *(i_n+1)-th* CSI-RS resource in CSI-RS resources associated with the M pieces of sub-configuration information, the CSI-RS resources associated with the M pieces of sub-configuration information including a set of CSI-RS resources associated with each sub-configuration information in the M pieces of sub-configuration information, where 1 ≤ n ≤ N, and N ≤ M.

9. The method according to supplement 8, wherein,
a bitwidth of the *n-th* CRI in the N CRIs is

$\lceil \log(\sum_{m=1}^{M} \mathrm{Zm}) \rceil$ bits, where Zm is the number of CSI-RS resources to which the *m-th* sub-configuration information in the M pieces of sub-configuration information corresponds, and 1 ≤ m ≤ M; or, a bitwidth of the N CRIs is $\sum_{m=1}^{M} \mathrm{Zm}$ bits.

10. The method according to supplement 2, wherein,
a value of the *n-th* CRI in the N CRIs is i_n, and the *n-th* CRI is associated with the *(i_n+1)-th* CSI-RS resource in the Y CSI-RS resources in one CSI-RS resource set in the at least one CSI-RS resource set, where 1 ≤ n ≤ N.

11. The method according to supplement 10, wherein,

a bitwidth of the *n-th* CRI in the N CRIs is $\lceil \log(\mathrm{Y}) \rceil$ bits; or
a bitwidth of the N CRIs is Y bits.

12. The method according to supplement 1, wherein,

the CSI report configuration information is associated with one CSI-RS resource set in the at least one CSI-RS resource set;

and each sub-configuration information in the M pieces of sub-configuration information is associated with Y CSI-RS resources in one CSI-RS resource set in the at least one CSI-RS resource set.

13. The method according to supplement 12, wherein,

the *m-th* sub-configuration information in the M pieces of sub-configuration information includes one piece of port indication information, where $1 \leq m \leq M$.

13a. The method according to supplement 12, wherein,

a value of each CRI in the N CRIs is associated with one piece of sub-configuration information in the M pieces of sub-configuration information, and/or a value of each CRI in the N CRIs is associated with all sub-configuration information in the M pieces of sub-configuration information.

14. The method according to supplement 12, wherein,

a value of the *n-th* CRI in the N CRIs is i_n, and the *n-th* CRI is associated with the *(i_n+1)-th* CSI-RS resource in the Y CSI-RS resources in one CSI-RS resource set in the at least one CSI-RS resource set, where $1 \leq n \leq N$.

15. The method according to supplement 14, wherein,

a bitwidth of the *n-th* CRI in the N CRIs is $\lceil \log(Y) \rceil$ bits; or
a bitwidth of the N CRIs is Y bits.

16. The method according to supplement 1, wherein, at least one piece of sub-configuration information in the M pieces of sub-configuration information in the CSI reporting configuration information is used as reference sub-configuration information.

17. The method according to supplement 16, wherein,

the CSI report includes at least channel state information of the reference sub-configuration information.

18. The method according to supplement 16, wherein,

the reference sub-configuration is indicated via predefinition or signaling.

19. A channel state information (CSI) report reception method, configured in a network device, the method including:

transmitting channel state information reference signal (CSI-RS) resource configuration information and CSI report configuration information to a terminal equipment,

wherein the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and

receiving a CSI report generated by the terminal equipment according to the CSI-RS resource configuration information and the CSI report configuration information, wherein at least one piece of sub-configuration information in the M pieces of sub-configuration information in the CSI reporting configuration information is used as reference sub-configuration information.

20. The method according to supplement 19, wherein,

the CSI report includes at least channel state information of the reference sub-configuration information.

21. The method according to supplement 19, wherein,

the reference sub-configuration is indicated via predefinition or signaling.

An apparatus of a network device side:

1. A channel state information (CSI) report reception apparatus, configured in a network device, the apparatus including:

a transmission unit configured to transmit channel state information reference signal (CSI-RS) resource configuration information and CSI report configuration information to a terminal equipment,

wherein the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and

a reception unit configured to receive a CSI report generated by the terminal equipment according to the CSI-RS resource configuration information and the CSI report configuration information, wherein the CSI report includes N CSI-RS resource indices (CRIs), where N is an integer greater than or equal to 1.

2. The apparatus according to supplement 1, wherein,

the CSI report configuration information is associated with one CSI-RS resource set in the at least one CSI-RS resource set;

and the *m-th* sub-configuration information in the M pieces of sub-configuration information is associated with Zm CSI-RS resources in Y CSI-RS resources in one CSI-RS resource set in the at least one CSI-RS resource set, where Zm is a positive integer, Zm ≤ Y, and 1 ≤ m ≤ M.

3. The apparatus according to supplement 2, wherein,

the *m-th* sub-configuration information includes IDs of the Zm CSI-RS resources.

4. The method according to supplement 3, wherein,

$$\sum_{m=1}^{M} Zm \leq Y.$$

5. The apparatus according to supplement 2, wherein,

the number of CSI-RS resources (a value of Zm) associated with each sub-configuration information in the M pieces of sub-configuration information is identical or different.

5a. The apparatus according to supplement 2, wherein,

a value of each CRI in the N CRIs is associated with one piece of sub-configuration information in the M pieces of sub-configuration information, and/or a value of each CRI in the N CRIs is associated with all sub-configuration information in the M pieces of sub-configuration information.

6. The apparatus according to supplement 2, wherein,

a value of the *n-th* CRI in the N CRIs is i_n, and the *n-th* CRI is associated with the *(i_n+1)-th* CSI-RS resource in the Zm CSI-RS resources associated with the *m-th* sub-configuration information in the M pieces of sub-configuration information, where 1 ≤ n ≤ N, 1 ≤ m ≤ M, and N ≤ M.

7. The apparatus according to supplement 6, wherein,

a bitwidth of the *n-th* CRI in the N CRIs is $\lceil \log(Zm) \rceil$ bits.

8. The apparatus according to supplement 2, wherein,

a value of the *n-th* CRI in the N CRIs is i_n, and the *n-th* CRI is associated with the *(i_n+1)-th* CSI-RS resource in CSI-RS resources associated with the M pieces of sub-configuration information, the CSI-RS resources associated with the M pieces of sub-configuration information including a set of CSI-RS resources associated with each sub-configuration information in the M pieces of sub-configuration information, where 1 ≤ n ≤ N, and N ≤ M.

9. The apparatus according to supplement 8, wherein,

a bitwidth of the *n-th* CRI in the N CRIs is $\lceil \log(\sum_{m=1}^{M} Zm) \rceil$ bits, where Zm is the number of CSI-RS resources to which the *m-th* sub-configuration information in the M pieces of sub-configuration information corresponds, and 1 ≤ m ≤ M; or, a bitwidth of the N CRIs is $\sum_{m=1}^{M} Zm$ bits.

10. The apparatus according to supplement 2, wherein,

a value of the *n-th* CRI in the N CRIs is i_n, and the *n-th* CRI is associated with the *(i_n+1)-th* CSI-RS resource in the Y CSI-RS resources in one CSI-RS resource set in the at least one CSI-RS resource set, where 1 ≤ n ≤ N.

11. The apparatus according to supplement 10, wherein,

a bitwidth of the *n-th* CRI in the N CRIs is $\lceil \log(Y) \rceil$ bits; or a bitwidth of the N CRIs is Y bits.

12. The apparatus according to supplement 1, wherein,

the CSI report configuration information is associated with one CSI-RS resource set in the at least one CSI-RS resource set;

and each sub-configuration information in the M pieces of sub-configuration information is associated with Y CSI-RS resources in one CSI-RS resource set in the at least one CSI-RS resource set.

13. The apparatus according to supplement 12, wherein,

the *m-th* sub-configuration information in the M pieces of sub-configuration information includes one piece of port indication information, where 1 ≤ m ≤ M.

13a. The apparatus according to supplement 12, wherein,

a value of each CRI in the N CRIs is associated with one piece of sub-configuration information in the M pieces of sub-configuration information, and/or a value of each CRI in the N CRIs is associated with all sub-configuration information in the M pieces of sub-configuration information.

14. The apparatus according to supplement 12, wherein,

a value of the *n-th* CRI in the N CRIs is i_n, and the *n-th* CRI is associated with the *(i_n+1)-th* CSI-RS resource in the Y CSI-RS resources in one CSI-RS resource set in the at least one CSI-RS resource set, where 1 ≤ n ≤ N.

15. The apparatus according to supplement 14, wherein,

a bitwidth of the *n-th* CRI in the N CRIs is

$$\lceil \log(Y) \rceil \text{ bits; or}$$

a bitwidth of the N CRIs is Y bits.

16. The apparatus according to supplement 1, wherein,
at least one piece of sub-configuration information in the M pieces of sub-configuration information in the CSI reporting configuration information is used as reference sub-configuration information.
17. The apparatus according to supplement 16, wherein,
the CSI report includes at least channel state information of the reference sub-configuration information.
18. The apparatus according to supplement 16, wherein,
the reference sub-configuration is indicated via predefinition or signaling.
19. A channel state information (CSI) report reception apparatus, configured in a network device, the apparatus including:

a transmission unit configured to transmit channel state information reference signal (CSI-RS) resource configuration information and CSI report configuration information to a terminal equipment,
wherein the CSI-RS resource configuration information is used to configure at least one CSI-RS resource set, one CSI-RS resource set in the at least one CSI-RS resource set including Y CSI-RS resources, and the CSI report configuration information includes M pieces of sub-configuration information, where Y and M are integers greater than or equal to 1; and
a reception unit configured to receive a CSI report generated by the terminal equipment according to the CSI-RS resource configuration information and the CSI report configuration information, wherein at least one piece of sub-configuration information in the M pieces of sub-configuration information in the CSI reporting configuration information is used as reference sub-configuration information.

20. The apparatus according to supplement 19, wherein,
the CSI report includes at least channel state information of the reference sub-configuration information.
21. The apparatus according to supplement 19, wherein,
the reference sub-configuration is indicated via predefinition or signaling.

**Claims**

1. A channel state information (CSI) report generation apparatus, configured in a terminal equipment, the apparatus comprising:

a reception unit configured to receive channel state information reference signal (CSI-RS) resource configuration information and CSI report configuration information,
wherein the CSI-RS resource configuration information is used to configure at least one CSI-RS resource set, one CSI-RS resource set in the at least one CSI-RS resource set comprising Y CSI-RS resources, and the CSI report configuration information comprises M pieces of sub-configuration information, where Y and M are integers greater than or equal to 1; and
a generation unit configured to generate a CSI report according to the CSI-RS resource configuration information and the CSI report configuration information, wherein the CSI report comprises N CSI-RS resource indices (CRIs), where N is an integer greater than or equal to 1.

2. The apparatus according to claim 1, wherein,

the CSI report configuration information is associated with one CSI-RS resource set in the at least one CSI-RS resource set;
and *m-th* sub-configuration information in the M pieces of sub-configuration information is associated with Zm CSI-RS resources in Y CSI-RS resources in one CSI-RS resource set in the at least one CSI-RS resource set, where Zm is a positive integer, $Zm \leq Y$, and $1 \leq m \leq M$.

3. The apparatus according to claim 2, wherein,
the *m-th* sub-configuration information comprises IDs of the Zm CSI-RS resources.

4. The apparatus according to claim 3, wherein,

$$\sum_{m=1}^{M} Zm \leq Y.$$

5. The apparatus according to claim 2, wherein,
the number of CSI-RS resources associated with each sub-configuration information in the M pieces of sub-configuration information is identical or different.

6. The apparatus according to claim 2, wherein,
a value of each CRI in the N CRIs is associated with one piece of sub-configuration information in the M pieces of sub-configuration information, and/or a value of each CRI in the N CRIs is associated with all sub-configuration information in the M pieces of sub-configuration information.

7. The apparatus according to claim 2, wherein,
a value of a *n-th* CRI in the N CRIs is i_n, and the *n-th* CRI is associated with an *(i_n+1)-th* CSI-RS resource in the Zm CSI-RS resources associated with the *m-th* sub-configuration information in the M pieces of sub-configuration information, where $1 \leq n \leq N$, $1 \leq m \leq M$, and $N \leq M$.

8. The apparatus according to claim 7, wherein,
a bitwidth of the *n-th* CRI in the N CRIs is $\lceil \log(Zm) \rceil$ bits.

9. The apparatus according to claim 2, wherein,
a value of a *n-th* CRI in the N CRIs is i_n, and the *n-th* CRI is associated with an *(i_n+1)-th* CSI-RS resource in CSI-RS resources associated with the M pieces of sub-configuration information, the CSI-RS resources associated with the M pieces of sub-configuration information comprising a set of CSI-RS resources associated with each sub-configuration information in the M pieces of sub-configuration information, where $1 \leq n \leq N$, and $N \leq M$.

10. The apparatus according to claim 9, wherein,

a bitwidth of the *n-th* CRI in the N CRIs is $\lceil \log(\sum_{m=1}^{M} Zm) \rceil$ bits, where Zm is the number of CSI-RS resources to which the *m-th* sub-configuration information in the M pieces of sub-configuration information corresponds, and $1 \leq m \leq M$; or,

a bitwidth of the N CRIs is $\sum_{m=1}^{M} Zm$ bits.

11. The apparatus according to claim 2, wherein,
a value of a *n-th* CRI in the N CRIs is i_n, and the *n-th* CRI is associated with an *(i_n+1)-th* CSI-RS resource in the Y CSI-RS resources in one CSI-RS resource set in the at least one CSI-RS resource set, where $1 \leq n \leq N$.

12. The apparatus according to claim 11, wherein,

a bitwidth of the *n-th* CRI in the N CRIs is $\lceil \log(Y) \rceil$ bits; or
a bitwidth of the N CRIs is Y bits.

13. The apparatus according to claim 1, wherein,

the CSI report configuration information is associated with one CSI-RS resource set in the at least one CSI-RS resource set;
and each sub-configuration information in the M pieces of sub-configuration information is associated with Y CSI-RS resources in one CSI-RS resource set in the at least one CSI-RS resource set.

14. The apparatus according to claim 13, wherein,
*m-th* sub-configuration information in the M pieces of sub-configuration information comprises one piece of port indication information, where $1 \leq m \leq M$.

15. The apparatus according to claim 13, wherein,
a value of each CRI in the N CRIs is associated with one piece of sub-configuration information in the M pieces of sub-configuration information, and/or a value of each CRI in the N CRIs is associated with all sub-configuration information in the M pieces of sub-configuration information.

16. The apparatus according to claim 13, wherein,
a value of a *n-th* CRI in the N CRIs is i_n, and the *n-th* CRI is associated with an *(i_n+1)-th* CSI-RS resource in the Y CSI-RS resources in one CSI-RS resource set in the at least one CSI-RS resource set, where $1 \leq n \leq N$.

17. The apparatus according to claim 16, wherein,

a bitwidth of the *n-th* CRI in the N CRIs is $\lceil \log(Y) \rceil$ bits; or
a bitwidth of the N CRIs is Y bits.

18. A channel state information (CSI) report generation method, configured in a terminal equipment, the method comprising:

receiving channel state information reference signal (CSI-RS) resource configuration information and CSI report configuration information, wherein the CSI-RS resource configuration information is used to configure at least one CSI-RS resource set, one CSI-RS resource set in the at least one CSI-RS resource set comprising Y CSI-RS resources, and the CSI report configuration information comprises M pieces of sub-configuration information, where Y and M are integers greater than or equal to 1; and
generating a CSI report according to the CSI-RS resource configuration information and the CSI report configuration information, wherein the CSI report comprises N CSI-RS resource indices (CRIs), where N is an integer greater than or equal to 1.

19. The method according to claim 18, wherein,

the CSI report configuration information is associated with one CSI-RS resource set in the at least one CSI-RS resource set;

and *m-th* sub-configuration information in the M pieces of sub-configuration information is associated with Zm CSI-RS resources in Y CSI-RS resources in one CSI-RS resource set in the at least one CSI-RS resource set, where Zm is a positive integer, Zm $\leq$ Y, and $1 \leq m \leq$ M.

20. A channel state information (CSI) report reception apparatus, configured in a network device, the apparatus comprising:

a transmission unit configured to transmit channel state information reference signal (CSI-RS) resource configuration information and CSI report configuration information to a terminal equipment,

wherein the CSI-RS resource configuration information is used to configure at least one CSI-RS resource set, one CSI-RS resource set in the at least one CSI-RS resource set comprising Y CSI-RS resources, and the CSI report configuration information comprises M pieces of sub-configuration information, where Y and M are integers greater than or equal to 1; and

a reception unit configured to receive a CSI report generated by the terminal equipment according to the CSI-RS resource configuration information and the CSI report configuration information, wherein the CSI report comprises N CSI-RS resource indices (CRIs), where N is an integer greater than or equal to 1.

**100**

101

103

102

**Fig. 1**

TxRU

TxRU

TxRU

ON/OFF adaption

TxRU

TxRU

TxRU

ON/OFF adaption

**Fig. 2**

301

channel state information reference signal (CSI-RS) resource configuration information and CSI report configuration information are received

302

a CSI report is generated according to the CSI-RS resource configuration information and the CSI report configuration information

**Fig. 3**

CSI-RS resource set

CSI-RS #0-#15

| sub-configuration 1 | sub-configuration 2 | sub-configuration 3 |
|---|---|---|
| CSI-RS #0-#7 | CSI-RS #8-#10 | CSI-RS #11-#15 |

**Fig. 3A**

CSI-RS resource set

CSI-RS #0-#31

| sub-configuration 1 | sub-configuration 2 | sub-configuration 3 |

| CSI-RS #0-#7 | CSI-RS #8-#10 | CSI-RS #11-#15 |

**Fig. 3B**

401

channel state information reference signal (CSI-RS) resource configuration information and CSI report configuration information are transmitted

402

a CSI report generated according to the CSI-RS resource configuration information and the CSI report configuration information is received

**Fig. 4**

500

CSI report generation apparatus

501

reception unit

502

generation unit

Fig. 5

600

CSI report reception apparatus

601

transmission unit

602

reception unit

Fig. 6

700

network device

720

710

750

memory

730

program

processor

740

transceiver

**Fig. 7**

800

terminal equipment

810

830

840

input unit

communications
module
(transmitter/receiver)

820

memory

buffer

application/
function

data

program

processor

display

850

power supply

860

**Fig. 8**

## INTERNATIONAL SEARCH REPORT

| | International application No. |
|---|---|
| | **PCT/CN2023/112400** |

| A. | CLASSIFICATION OF SUBJECT MATTER |
|---|---|

H04L5/00(2006.01)i;  H04W24/00(2009.01)i

According to International Patent Classification (IPC) or to both national classification and IPC

| B. | FIELDS SEARCHED |
|---|---|

Minimum documentation searched (classification system followed by classification symbols)

  IPC:H04L,H04W

Documentation searched other than minimum documentation to the extent that such documents are included in the fields searched

Electronic data base consulted during the international search (name of data base and, where practicable, search terms used)

  CNKI, CNTXT, DWPI, ENTXTC, IEEE, 3GPP: 网络, 终端, 能耗, 节能, 上报配置信息, 信道状态信息, 资源配置信息, 报告, 索引, 子, 多个, 增强, 加强, network, terminal, CSI, CRI, CSI RS, channel state information, resource index, sub, mult+

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 110831196 A (VIVO MOBILE COMMUNICATION CO., LTD.) 21 February 2020 (2020-02-21) <br> description, paragraphs 0005-0211 | 1-20 |
| A | CN 108810932 A (HUAWEI TECHNOLOGIES CO., LTD.) 13 November 2018 (2018-11-13) <br> entire document | 1-20 |
| A | CN 105471552 A (BEIJING SAMSUNG TELECOM R&D CENTER et al.) 06 April 2016 (2016-04-06) <br> entire document | 1-20 |
| A | CN 109391432 A (HUAWEI TECHNOLOGIES CO., LTD.) 26 February 2019 (2019-02-26) <br> entire document | 1-20 |
| A | US 2013303090 A1 (TELEFONAKTIEBOLAGET LM ERICSSON (PUBL)) 14 November 2013 (2013-11-14) <br> entire document | 1-20 |
| A | SAMSUNG. "Test Case Design for Hybrid CSI Mechanism 2" <br> *3GPP TSG-RAN WG4 MEETING #82BIS, R4-1704782*, 07 April 2017 (2017-04-07), <br> entire document | 1-20 |

☐ Further documents are listed in the continuation of Box C.  ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 September 2023** | **21 September 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT Information on patent family members | | | | International application No. PCT/CN2023/112400 | | | |
|---|---|---|---|---|---|---|---|
| Patent document cited in search report | | | Publication date (day/month/year) | Patent family member(s) | | | Publication date (day/month/year) |
| CN | 110831196 | A | 21 February 2020 | WO | 2020034857 | A1 | 20 February 2020 |
| | | | | US | 2021167830 | A1 | 03 June 2021 |
| CN | 108810932 | A | 13 November 2018 | WO | 2018202181 | A1 | 08 November 2018 |
| | | | | EP | 3541111 | A1 | 18 September 2019 |
| | | | | VN | 66046 | A | 25 September 2019 |
| | | | | US | 2019297519 | A1 | 26 September 2019 |
| | | | | IN | 201937022329 | A | 08 November 2019 |
| | | | | CN | 110612734 | A | 24 December 2019 |
| | | | | BR | 112019015469 | A2 | 31 March 2020 |
| | | | | EP | 3541111 | B1 | 24 November 2021 |
| CN | 105471552 | A | 06 April 2016 | WO | 2015190847 | A1 | 17 December 2015 |
| | | | | KR | 20170018046 | A | 15 February 2017 |
| | | | | EP | 3155855 | A1 | 19 April 2017 |
| | | | | IN | 201737000511 | A | 05 May 2017 |
| | | | | US | 2017134130 | A1 | 11 May 2017 |
| | | | | JP | 2017526207 | W | 07 September 2017 |
| | | | | EP | 3155855 | A4 | 21 February 2018 |
| | | | | US | 10164748 | B2 | 25 December 2018 |
| | | | | US | 2019109690 | A1 | 11 April 2019 |
| | | | | JP | 6619363 | B2 | 11 December 2019 |
| | | | | CN | 111212477 | A | 29 May 2020 |
| | | | | US | 10862641 | B2 | 08 December 2020 |
| | | | | KR | 102372608 | B1 | 10 March 2022 |
| | | | | EP | 3155855 | B1 | 04 May 2022 |
| CN | 109391432 | A | 26 February 2019 | WO | 2019029488 | A1 | 14 February 2019 |
| US | 2013303090 | A1 | 14 November 2013 | WO | 2013169196 | A1 | 14 November 2013 |
| | | | | US | 8798550 | B2 | 05 August 2014 |
| | | | | CN | 104321976 | A | 28 January 2015 |
| | | | | EP | 2847879 | A1 | 18 March 2015 |
| | | | | EP | 2847879 | B1 | 06 July 2016 |

Form PCT/ISA/210 (patent family annex) (July 2022)